# EUROPEAN PATENT APPLICATION

(11) **EP 4 184 974 A1**
(43) Date of publication of application: **24.05.2023**
(21) Application number: 20948334.6
(22) Date of filing: 07.08.2020
(51) Int. Cl.: H04W 12/06

(54) **REGISTRATION METHOD AND APPARATUS**

(71) Applicant: Huawei Technologies Co., Ltd., Shenzhen, Guangdong 518129 (CN)
(72) Inventor: DENG, Juan, Shenzhen, Guangdong 518129 (CN); ZHANG, Bo, Shenzhen, Guangdong 518129 (CN)
(74) Representative: Goddar, Heinz J.
(86) International application number: PCT/CN2020/108010
(87) International publication number: WO 2022/027686

(57) **Abstract**

Embodiments of this application provide a registration method and an apparatus, to define authentication between a terminal device and a network device, a method for authorizing, by the network device, an MBS (service) joined by the terminal device, a method for obtaining a key of the MBS (service) by the terminal device, and a method for processing a security policy of the MBS (service), when the terminal device joins the MBS (service). A first session management function receives identification information of an MB S (service) from a terminal device. The first session management function determines, based on the identification information of the MBS (service), to perform authentication and authorization on the MBS (service) of the terminal device. The first session management function initiates the authentication and authorization on the MBS (service) of the terminal device.

## Description

### TECHNICAL FIELD

This application relates to the field of wireless communication technologies, and in particular, to a registration method and an apparatus.

### BACKGROUND

A multicast broadcast service (multicast broadcast service, MBS) and an MBS architecture in a 3rd generation (3rd generation, 3G) system and a 4th generation (4th generation, 4G) system are defined in the 3rd generation partnership project (3rd generation partnership project, 3GPP) standards 22.146 and 23.246. The MBS (service) is a point-to-multipoint bearer service, used to send data from a single data source to a plurality of receivers. The MBS (service) includes a multicast service and a broadcast service.

An MBS user service is defined in the 3GPP standard 22.246, and is a service provided by an operator for a subscribed user. The MBS user service is based on the MBS (service). One MBS user service can use one or more MBS (service)s at the same time.

An MBS security architecture in 3G and 4G is defined in the 3GPP standard 33.246. A registration procedure of the MBS user service is defined. According to the registration procedure of the MBS user service, authentication may be implemented between a terminal device (user equipment, UE) and a network device, and authorization may be performed by the network device on the MBS user service joined by the terminal device. After the authentication and authorization succeed, the network device may further send a key of the MBS user service to the terminal device, to implement security of data of the MBS user service in a transmission process.

A new MBS architecture in a 5th generation (5th generation, 5G) system is proposed in the 3GPP research project report 23.757, and also implements a point-to-multipoint bearer service for sending data from a single data source to a plurality of receivers. The MBS architecture in the 5G system is different from the MBS architecture in the 3G and 4G systems, and network elements in the 5G system are also different from network elements in the 3G and 4G systems. Therefore, the registration procedure of the MBS user service in the 3G and 4G systems (in other words, authentication performed between the terminal device and the network device and authorization performed by the network device on the MBS user service joined by the terminal device) is not applicable to the 5G system, and a registration procedure of the MBS user service in the 5G system is not provided in an existing communication standard.

### SUMMARY

Embodiments of this application provide a registration method and an apparatus, to define authentication between a terminal device and a network device, a method for authorizing, by the network device, an MBS (service) joined by the terminal device, a method for obtaining a key of the MBS (service) by the terminal device, and a method for processing a security policy of the MBS (service), when the terminal device joins the MBS (service).

According to a first aspect, a registration method is provided. The method includes: A first session management function receives identification information of an MB S (service) from a terminal device. The first session management function determines, based on the identification information of the MBS (service), to perform authentication and authorization on the MBS (service) of the terminal device. The first session management function initiates the authentication and authorization on the MBS (service) of the terminal device.

Optionally, when receiving the identification information of the MBS (service), the first session management function may further receive a first identifier of the terminal device. The first identifier is an identifier used when the terminal device uses the MBS (service). For example, a message carrying the identification information of the MBS (service) may further include the first identifier of the terminal device.

In this method, authentication between the terminal device and the network device and authorization performed by the network device on the MBS (service) joined by the terminal device may be implemented.

In a possible implementation, that the first session management function determines, based on the identification information of the MBS (service), to perform authentication and authorization on the MBS (service) of the terminal device includes: The first session management function determines, based on subscription data of the MBS (service), to perform authorization on a device requesting to use the MBS (service) before using the MBS (service). The first session management function determines to perform authentication and authorization on the MBS (service) of the terminal device.

That is, in this implementation, the first session management function may determine, based on the subscription data of the MBS (service), to perform authentication and authorization on the MBS (service) of the terminal device.

In a possible implementation, that the first session management function initiates the authentication and authorization on the MBS (service) of the terminal device includes: The first session management function sends a first message to the terminal device, where the first message includes the identification information of the MBS (service). The first session management function receives a second message from the terminal device, where the second message includes a first identifier of the terminal device and the identification information of the MBS (service), and the first identifier is an identifier used when the terminal device uses the MBS (service).

In a possible implementation, after the first session management function receives the second message from the terminal device, the method further includes: The first session management function may further send a third message to a first MBS authentication and authorization function, where the third message includes the identification information of the MBS (service) and the first identifier of the terminal device, and the third message requests to perform authentication and authorization on the MBS (service) of the terminal device.

In a possible implementation, after the first session management function sends the third message to the first MBS authentication and authorization function, the method further includes: The first session management function may further receive a fourth message from the first MBS authentication and authorization function, where the fourth message includes an authentication and authorization result, and the authentication and authorization result includes success or failure.

In a possible implementation, the fourth message further includes a validity period of the authentication and authorization result; and/or the fourth message further includes a key and an optional key identifier that are of the MBS (service), and the key of the MBS (service) is used to protect data of the MBS (service).

In a possible implementation, after the first session management function receives the fourth message from the first MBS authentication and authorization function, the method further includes: The first session management function may further send the authentication and authorization result to the terminal device.

In a possible implementation, the first session management function may further send the validity period of the authentication and authorization result to the terminal device.

In a possible implementation, the first session management function may further send the key of the MBS (service) to the terminal device. Optionally, the first session management function may further send a key identifier of the MBS (service) at the same time.

In a possible implementation, the fourth message further includes the validity period of the authentication and authorization result, and the first session management function may further release a session of the MBS (service) of the terminal device based on the validity period of the authentication and authorization result.

In a possible implementation, that a first session management function receives identification information of an MBS (service) from a terminal device includes: The first session management function receives the identification information of the MBS (service) from the terminal device via an access network device. Alternatively, the first session management function receives the identification information of the MBS (service) from the terminal device via an access and mobility management function. Alternatively, the first session management function receives the identification information of the MBS (service) from the terminal device via a user plane function.

According to a second aspect, a registration method is provided. The method includes: A first MBS authentication and authorization function receives a third message from a first session management function, where the third message includes identification information of an MBS (service) and a first identifier of a terminal device, the third message requests to perform authentication and authorization on the MBS (service) of the terminal device, and the first identifier is an identifier used when the terminal device uses the MBS (service). The first MBS authentication and authorization function sends a fourth message to the first session management function, where the fourth message includes an authentication and authorization result, and the authentication and authorization result includes success or failure.

In this method, the terminal device may obtain the key of the MBS (service).

In a possible implementation, the fourth message further includes a validity period of the authentication and authorization result; and/or the fourth message further includes the key and an optional key identifier that are of the MBS (service), and the key of the MBS (service) is used to protect data of the MBS (service).

In a possible implementation, after the first MBS authentication and authorization function receives the fourth message from the first session management function, the first MBS authentication and authorization function may further send the key and the optional key identifier that are of the MBS (service) to the terminal device.

In a possible implementation, before the first MBS authentication and authorization function sends the key of the MBS (service) and the key identifier to the terminal device, the method further includes:

The first MB S authentication and authorization function determines that authentication and authorization on usage of the MBS (service) by the terminal device is success.

Alternatively, the first MBS authentication and authorization function receives a fifth message from the terminal device, where the fifth message requests the key of the MBS (service).

Alternatively, the first MBS authentication and authorization function generates or updates the key of the MBS (service).

Alternatively, the first MBS authentication and authorization function determines to start transmission of the data of the MBS (service).

In a possible implementation, that the first MBS authentication and authorization function sends the key of the MBS (service) to the terminal device includes:

The first MBS authentication and authorization function sends the key of the MBS (service) to the terminal device via the first session management function.

Alternatively, the first MB S authentication and authorization function sends the key of the MB S (service) to the terminal device via a user plane function UPF.

Alternatively, the first MBS authentication and authorization function sends the key of the MBS (service) to the terminal device via a first MBS user plane function.

According to a third aspect, a registration method is provided. The method includes: A terminal device sends identification information of a multicast broadcast service MB S (service) to a first session management function. The terminal device receives an authentication and authorization result from the first session management function, where the authentication and authorization result includes success or failure.

In this method, authentication between the terminal device and a network device and authorization performed by the network device on the MBS (service) joined by the terminal device may be implemented, and the terminal device may obtain a key of the MBS (service).

In a possible implementation, after the terminal device sends the identification information of the MBS (service) to the first session management function, the terminal device may further receive a first message from the first session management function, where the first message includes the identification information of the MBS (service). The terminal device sends a second message to the first session management function, where the second message includes the identification information of the MBS (service) and a first identifier of the terminal device, and the first identifier is an identifier used when the terminal device uses the MBS (service).

In a possible implementation, the terminal device may further receive the key of the MBS (service) from a first MBS authentication and authorization function, where the key of the MBS (service) is used by the terminal device to decrypt protected data of the MBS (service), or is used by the terminal device to verify whether data of the MBS (service) is tampered with.

In a possible implementation, before the terminal device receives the key of the MBS (service) from the first MBS authentication and authorization function, the terminal device may further send a fifth message to the first MBS authentication and authorization function, where the fifth message includes the identification information of the MBS (service) and the first identifier of the terminal device, or a key identifier of the MBS (service) and the first identifier of the terminal device, and the fifth message requests the key of the MBS (service).

In a possible implementation, that the terminal device receives the key of the MBS (service) from the first MBS authentication and authorization function includes:

The terminal device receives the key of the MBS (service) from the first MBS authentication and authorization function via the first session management function.

Alternatively, the terminal device receives the key of the MBS (service) from the first MBS authentication and authorization function via a user plane function UPF.

Alternatively, the terminal device receives the key of the MBS (service) from the first MBS authentication and authorization function via a first MBS user plane function.

According to a fourth aspect, a registration method is provided. The method includes: A first MBS authentication and authorization function sends a security policy of an MBS (service) to a first MBS user plane function, where the security policy of the MBS (service) indicates to perform security protection on data of the MBS (service), or indicates not to perform security protection on the data of the MBS (service).

In this method, the security policy of the MBS (service) can be processed.

In a possible implementation, before the first MBS authentication and authorization function sends the security policy of the MBS (service) to the first MBS user plane function, the first MBS authentication and authorization function may further send a sixth message to a unified data management function UDM or a unified data repository UDR, where the sixth message includes identification information of the MBS (service). The first MBS authentication and authorization function receives the security policy of the MBS (service) from the UDM or the UDR.

In a possible implementation, the first MBS authentication and authorization function may further send a key and an optional key identifier that are of the MBS (service) to the first MBS user plane function, where the key of the MBS (service) is used to protect the data of the MBS (service).

According to a fifth aspect, a registration method is provided. The method includes: A first MBS user plane function receives a security policy of an MBS (service) from a first MBS authentication and authorization function, where the security policy of the MBS (service) indicates to perform security protection on data of the MBS (service), or indicates not to perform security protection on the data of the MBS (service) of the terminal device. The first MBS user plane function performs security protection on the data of the MBS (service) by using the key of the MBS (service), or does not protect the data of the MBS (service), according to the security policy of the MBS (service).

In this method, the security policy of the MBS (service) can be processed.

In a possible implementation, the first MBS user plane function may further receive the key and an optional key identifier that are of the MBS (service) from the first MBS authentication and authorization function.

In a possible implementation, the first MBS user plane function may further generate the key of the MBS (service).

According to a sixth aspect, a registration method is provided. The method includes: A first MBS user plane function receives a first message from a terminal device, where the first message includes identification information of an MBS (service). The first MBS user plane function sends a second message to the first MBS authentication and authorization function, where the second message carries the identification information of the MB S (service).

Optionally, the first message may further include a first identifier of the terminal device. Optionally, the second message may further include the first identifier of the terminal device.

In this method, authentication between the terminal device and the network device and authorization performed by the network device on the MBS (service) joined by the terminal device may be implemented.

In a possible implementation, the first MBS user plane function sends the second message to the first MBS authentication and authorization function, the first MBS user plane function may further receive a third message from the first MBS authentication and authorization function, where the third message includes the identification information of the MBS (service) and an authentication and authorization result. The authentication and authorization result include authentication and authorization success or failure. The first MBS user plane function sends, to the terminal device, the authentication and authorization result, or the identifier of the MBS user service and the authentication and authorization result.

In a possible implementation, that a first MBS user plane function receives a first message from a terminal device includes: The first MBS user plane function receives the first message from the terminal device via a user plane function UPF.

According to a seventh aspect, a registration method is provided. The method includes: A first MBS user plane function obtains a key and an optional key identifier that are of an MBS (service). The first MBS user plane function sends, to a terminal device, the key and the optional key identifier that are of the MBS (service), where the key of the MBS is used to protect data of the MBS (service).

In this method, the terminal device may obtain the key of the MBS (service).

In a possible implementation, that a first MBS user plane function obtains a key and an optional key identifier that are of an MBS (service) includes: The first MBS user plane function receives the key and the optional key identifier that are of the MBS from a first MBS authentication and authorization function.

In a possible implementation, that a first MBS user plane function obtains a key and an optional key identifier that are of an MBS (service) includes: The first MBS user plane function generates the key and the optional key identifier that are of the MBS (service).

In a possible implementation, before the first MBS user plane function obtains the key and the optional key identifier that are of the MBS (service), the first MBS user plane function may further determine that there is to-be-sent data of the MBS (service), and security protection needs to be performed on the data of the MBS (service).

In a possible implementation, before the first MBS user plane function receives the key and optional key identifier that are of the MBS from the first MBS authentication and authorization function, the first MBS user plane function may further send a fourth message to the first MBS authentication and authorization function, where the fourth message carries identification information of the MBS (service).

In a possible implementation, before the first MBS user plane function sends the key and the optional key identifier that are of the MBS (service) to the terminal device, the first MBS user plane function may further receive a fifth message sent by the terminal device, where the fifth message carries the identification information of the MBS (service) and a first identifier of the terminal device, or a key identifier of the MBS (service) and the first identifier of the terminal device.

In a possible implementation, that the first MBS user plane function sends, to a terminal device, the key and the optional key identifier that are of the MBS (service) includes: The first MBS user plane function sends, to a user plane function UPF, the key and the optional key identifier that are of the MBS (service).

In a possible implementation, that the first MBS user plane function receives a fifth message sent by the terminal device includes: The first MBS user plane function receives the fifth message from the terminal device via the user plane function UPF.

According to an eighth aspect, a registration method is provided. The method includes: A terminal device sends a first message to a first MBS user plane function, where the first message includes identification information of an MBS (service) and a first identifier of the terminal device. The terminal device receives an authentication and authorization result or an identifier of the MBS user service and the authentication and authorization result from the first MBS user plane function. The authentication and authorization result includes success or failure.

In this method, authentication between the terminal device and a network device and authorization performed by the network device on the MBS (service) joined by the terminal device may be implemented, and the terminal device may obtain a key of the MBS (service).

Optionally, the terminal device sends the first message to the first MBS user plane function via a user plane function UPF.

In a possible implementation, after the terminal device sends the first message to the first MBS user plane function, the terminal device may further receive a key and an optional key identifier that are of the MBS and sent by the first MBS user plane function, where the key of the MBS (service) is used by the terminal device to decrypt protected data of the MBS (service), or is used by the terminal device to verify whether data of the MBS (service) is tampered with.

In a possible implementation, before the terminal device receives the key and the optional key identifier that are of the MBS and sent by the first MBS user plane function, the terminal device may further send a fifth message to the first MBS user plane function, where the fifth message carries the identification information of the MBS (service) and a first identifier of the terminal device, or a key identifier of the MBS (service) and the first identifier of the terminal device.

Optionally, the terminal device sends the fifth message to the first MBS user plane function via the UPF.

According to a ninth aspect, a registration method is provided. The method includes: An authentication and authorization function receives a first message from an access and mobility management function, where the first message includes identification information of an MBS (service) and a first identifier. The authentication and authorization function sends a second message to a first MBS authentication and authorization function, where the second message includes the identification information of the MBS (service) and the first identifier. The authentication and authorization function receives a third message from the first MBS authentication and authorization function, where the third message includes an authentication and authorization result and the identification information of the MBS (service), and the authentication and authorization result includes authentication and authorization success or failure. The authentication and authorization function sends a fourth message to the access and mobility management function, where the fourth message includes the authentication and authorization result and the identification information of the MBS (service).

In this method, authentication between the terminal device and the network device and authorization performed by the network device on the MBS (service) joined by the terminal device may be implemented.

In a possible implementation, the first message may further include a second identifier of the terminal device: the identification information of the terminal device.

In a possible implementation, the third message further includes the first identifier of the terminal device.

In a possible implementation, after the authentication and authorization function receives the third message from the first MBS authentication and authorization function, the authentication and authorization function may further send the identification information of the MBS (service), the authentication and authorization result, and the second identifier of the terminal device to a UDM/LTDR.

In a possible implementation, after the authentication and authorization function receives the third message from the first MBS authentication and authorization function, the authentication and authorization function may further send the identification information of the MBS (service), the authentication and authorization result, the second identifier of the terminal device, and the first identifier to the UDM/UDR.

According to a tenth aspect, a registration method is provided. The method includes: An access and mobility management function receives a fifth message from a terminal device, where the fifth message carries identification information of an MBS (service). The access and mobility management function determines, based on the identification information of the MBS (service), to perform authentication and authorization on usage of the MBS (service) by the terminal device. The access and mobility management function initiates the authentication and authorization on usage of the MBS (service) by the terminal device.

In this method, authentication between the terminal device and the network device and authorization performed by the network device on the MBS (service) joined by the terminal device may be implemented.

In a possible implementation, that the access and mobility management function determines, based on the identification information of the MBS (service), to perform authentication and authorization on usage of the MBS (service) by the terminal device includes: The access and mobility management function obtains subscription data of the MBS (service) based on the identification information of the MBS (service). The access and mobility management function determines, based on the subscription data corresponding to the identification information of the MBS (service), to perform authentication and authorization on usage of the MBS (service) by the terminal device.

In a possible implementation, the fifth message further includes a first identifier of the terminal device.

In a possible implementation, that the access and mobility management function initiates the authentication and authorization on usage of the MBS (service) by the terminal device includes: The access and mobility management function sends a first message to an authentication and authorization function, where the first message includes the identification information of the MBS (service) and the first identifier. The access and mobility management function receives a fourth message from the authentication and authorization function, where the fourth message includes an authentication and authorization result and the identification information of the MBS (service), and the authentication and authorization result includes authentication and authorization success or failure.

In a possible implementation, the first message may further include a second identifier of the terminal device.

In a possible implementation, before the access and mobility management function initiates the authentication and authorization on usage of the MBS (service) by the terminal device, the access and mobility management function may further send a sixth message to the terminal device, where the sixth message includes the identification information of the MBS (service). The access and mobility management function receives a seventh message from the terminal device, where the seventh message includes a first user identifier and the identification information of the MBS (service).

In a possible implementation, after the access and mobility management function receives the fourth message from the authentication and authorization function, the access and mobility management function may further send the authentication and authorization result and the identification information of the MBS (service) to the terminal device.

In a possible implementation, after the access and mobility management function receives the fourth message from the authentication and authorization function, the access and mobility management function may further send the identification information of the MBS (service), the authentication and authorization result, and a second identifier of the terminal device to a UDM/LTDR.

In a possible implementation, after the access and mobility management function receives the fourth message from the authentication and authorization function, the access and mobility management function may further send the identification information of the MBS (service), the authentication and authorization result, the second identifier of the terminal device, and the first identifier to the UDM/LTDR.

According to an eleventh aspect, a registration method is provided. The method includes: An access and mobility management function receives a key and an optional key identifier that are of an MBS (service) from an authentication and authorization function, where the key of the MBS (service) is used to protect data of the MBS (service). The access and mobility management function sends, to a terminal device, the key and the optional key identifier that are of the MBS (service).

In this method, the terminal device may obtain the key of the MBS (service).

In a possible implementation, before the access and mobility management function receives the key and the optional key identifier that are of the multicast broadcast service MBS (service) from the authentication and authorization function, the access and mobility management function may further receive a tenth message from the terminal device, where the tenth message includes identification information of the MBS (service) or a key identifier of the MBS (service). The access and mobility management function sends an eleventh message to the authentication and authorization function, where the eleventh message includes the identification information of the MBS (service) or the key identifier of the MBS (service).

In a possible implementation, that an access and mobility management function receives a key and an optional key identifier that are of an MBS (service) from an authentication and authorization function includes: The access and mobility management function receives the identification information of the MBS (service) and a first identifier from the terminal device. The access and mobility management function sends a first message to the authentication and authorization function, where the first message includes the identification information of the MBS (service) and the first identifier. The access and mobility management function receives a fourth message sent by the authentication and authorization function, where the fourth message includes the key and the optional key identifier that are of the MBS (service).

In a possible implementation, the fourth message further includes the identification information of the MBS user service, and an authentication and authorization result, and the authentication and authorization result includes authentication and authorization success or failure.

According to a twelfth aspect, a registration method is provided. The method includes: An authentication and authorization function receives a key and an optional key identifier that are of an MBS (service) from a first MB S authentication and authorization function. The authentication and authorization function sends to an access and mobility management function, the key and the optional key identifier that are of the MBS (service).

In this method, the terminal device may obtain the key of the MBS (service).

In a possible implementation, before the authentication and authorization function receives the key and the optional key identifier that are of the multicast broadcast service MBS (service) from the first MBS authentication and authorization function, the authentication and authorization function may further receive an eleventh message from the access and mobility management function, where the eleventh message includes identification information of the MBS (service) or a key identifier of the MBS (service). The authentication and authorization function sends the identification information of the MBS (service) or the key identifier of the MBS (service) to the first MBS authentication and authorization function.

In a possible implementation, that an authentication and authorization function receives a key and an optional key identifier that are of an MBS (service) from a first MBS authentication and authorization function further includes:

The authentication and authorization function receives a first message from the access and mobility management function, where the first message includes the identification information of the MBS (service) and a first identifier.

The authentication and authorization function sends a second message to the first MBS authentication and authorization function, where the second message includes the identification information of the MBS (service) and the first identifier.

The authentication and authorization function receives a third message from the first MBS authentication and authorization function, where the third message includes the key of the MBS (service) and the key identifier.

In a possible implementation, the third message further includes the identification information of the MBS user, and an authentication and authorization result, and the authentication and authorization result includes authentication and authorization success or failure.

According to a thirteenth aspect, a registration method is provided. The method includes: A first session management function determines, based on subscription data of an MBS (service) of a terminal device, to perform authentication and authorization on the MBS (service) of the terminal device. The first session management function sends a first user identifier request message and identification information of the MBS (service) to a second session management function. The first session management function receives a first user identifier and the identification information of the MBS (service) from the second session management function. The first session management function sends the first user identifier and the identification information of the MBS (service) to a first MBS authentication and authorization function.

In this method, authentication between the terminal device and the network device and authorization performed by the network device on the MBS (service) joined by the terminal device may be implemented.

In a possible implementation, before the first session management function determines, based on the subscription data of the multicast broadcast service MBS (service) of the terminal device, to perform authentication and authorization on the MBS (service) of the terminal device, the first session management function may further receive the subscription data of the MBS (service) from a UDM or a UDR. Alternatively, the first session management function may further receive the subscription data of the MBS (service) from the second session management function.

In a possible implementation, before the first session management function determines, based on the subscription data of the MBS (service) of the terminal device, to perform authentication and authorization on the MBS (service) of the terminal device, the first session management function may further receive a first message from the second session management function, where the first message includes the identification information of the MBS (service).

In a possible implementation, after the first session management function sends the first user identifier and the identification information of the MBS (service) to the first MBS authentication and authorization function, the first session management function may further receive a second message from the first MBS authentication and authorization function, where the second message includes an authentication and authorization result and the identification information of the MBS (service), and the authentication and authorization result indicates that authentication and authorization of the MBS (service) of the terminal device succeeds or fails.

In a possible implementation, after the first session management function receives the second message from the first MBS authentication and authorization function, the first session management function may further send the authentication and authorization result and the identification information of the MBS (service) to the second session management function.

According to a fourteenth aspect, a registration method is provided. The method includes: A first MBS user plane function obtains a key and an optional key identifier that are of an MBS (service), where the key of the MBS (service) is used to protect data of the MBS (service). The first MBS user plane function sends the key and the optional key identifier that are of the MBS (service) to a terminal device.

In this method, the terminal device may obtain the key of the MBS (service).

In a possible implementation, that a first MBS user plane function obtains a key and an optional key identifier that are of a multicast broadcast service MB S (service) includes: The first MB S user plane function generates the key of the MBS (service).

In a possible implementation, that a first MBS user plane function obtains a key and an optional key identifier that are of a multicast broadcast service MBS (service) includes: The first MBS user plane function receives the key and the optional key identifier that are of the MBS (service) from a first MBS authentication and authorization function.

In a possible implementation, that the first MBS user plane function sends, to a terminal device, the key and the optional key identifier that are of the MBS (service) includes: The first MBS user plane function sends, to a user plane function, the key and the optional key identifier that are of the MBS (service).

In a possible implementation, before the first MBS user plane function obtains the key and the optional key identifier that are of the multicast broadcast service MBS (service), the first MBS user plane function may further receive a key identifier of the MBS or identification information of the MBS (service) from the user plane function.

In a possible implementation, before the first MBS user plane function receives the key and optional key identifier that are of the MBS from the first MBS authentication and authorization function, the first MBS user plane function may further send the key identifier of the MBS (service) or the identification information of the MBS (service) to the first MBS authentication and authorization function.

According to a fifteenth aspect, a registration apparatus is provided. The apparatus provided in this application specifically implements the foregoing method aspects, and includes a corresponding component (means) configured to perform a step or function described in the foregoing method aspects. The step or the function may be implemented by using software, hardware (for example, a circuit), or a combination of the hardware and the software.

In a possible design, the apparatus includes one or more processors and a communication unit. The one or more processors are configured to support the apparatus in implementing a corresponding function in the foregoing method.

Optionally, the apparatus may further include one or more memories. The memory is configured to couple to the processor, and store program instructions and/or data that are/is necessary for the apparatus. The one or more memories may be integrated with the processor, or may be disposed independent of the processor. This is not limited in this application.

In another possible design, the apparatus includes a transceiver, a processor, and a memory. The processor is configured to control the transceiver or an input/output circuit to receive and send a signal. The memory is configured to store a computer program. The processor is configured to run the computer program in the memory, to enable the apparatus to perform the method according to any one of the foregoing aspects.

In a possible design, the apparatus includes one or more processors and a communication unit. The one or more processors are configured to support the apparatus in implementing a corresponding function in the foregoing method.

Optionally, the apparatus may further include one or more memories. The memory is configured to couple to the processor, and store program instructions and/or data that are/is necessary for an AMF or UE. The one or more memories may be integrated with the processor, or may be disposed independent of the processor. This is not limited in this application.

In another possible design, the apparatus includes a transceiver, a processor, and a memory. The processor is configured to control the transceiver or an input/output circuit to receive and send a signal. The memory is configured to store a computer program. The processor is configured to run the computer program in the memory, to enable the apparatus to perform the method according to any one of the foregoing aspects.

According to a sixteenth aspect, a computer-readable storage medium is provided, and is configured to store a computer program, where the computer program includes instructions used to perform the method according to any one of the foregoing aspects.

According to a seventeenth aspect, a computer program product is provided. The computer program product includes computer program code. When the computer program code is run on a computer, the computer is enabled to perform the method according to any one of the foregoing aspects.

According to an eighteenth aspect, a chip system is provided. The chip system includes a processor and a memory. The processor is electrically coupled to the memory. The memory is configured to store computer program instructions. The processor is configured to execute some or all of the computer program instructions in the memory. When the some or all of the computer program instructions are executed, the processor is configured to implement the method according to any one of the foregoing aspects.

In a possible design, the chip system further includes a transceiver. The transceiver is configured to: send a signal processed by the processor, or receive a signal and input the signal to the processor. The chip system may include a chip, or may include the chip and another discrete component.

According to a nineteenth aspect, a communication system is provided. The system may include a first session management function for performing the method according to any one of the first aspect and the possible implementations of the first aspect, and a first MBS authentication and authorization function for performing the method according to any one of the second aspect and the possible implementations of the second aspect.

Optionally, the system may further include a terminal device for performing the method according to any one of the third aspect and the possible implementations of the third aspect, and/or may further include a first MBS user plane function for performing the method according to any one of the fifth aspect and the possible implementations of the fifth aspect.

The first MBS authentication and authorization function may further perform the method according to any one of the fourth aspect and the possible implementations of the fourth aspect.

According to a twentieth aspect, a communication system is provided. The system may include a first MBS authentication and authorization function for performing the method according to any one of the fourth aspect and the possible implementations of the fourth aspect, and a first MBS user plane function for performing the method according to any one of the fifth aspect and the possible implementations of the fifth aspect.

According to a twenty-first aspect, a communication system is provided. The system may include a first MBS user plane function for performing the method according to any one of the sixth aspect and the possible implementations of the sixth aspect, and a terminal device for performing the method according to any one of the eighth aspect and the possible implementations of the eighth aspect.

The first MBS user plane function may further perform the method according to any one of the seventh aspect and the possible implementations of the seventh aspect.

According to a twenty-second aspect, a communication system is provided. The system includes an authentication and authorization function for performing the method according to any one of the ninth aspect and the possible implementations of the ninth aspect, and an access and mobility management function for performing the method according to any one of the tenth aspect and the possible implementations of the tenth aspect.

The access and mobility management function may further perform the method according to any one of the eleventh aspect and the possible implementations of the eleventh aspect. The authentication and authorization function may further perform the method according to any one of the twelfth aspect and the possible implementations of the twelfth aspect.

According to a twenty-third aspect, a communication system is provided. The system includes a first session management function for performing the method according to any one of the thirteenth aspect and the possible implementations of the thirteenth aspect, and a first MBS user plane function for performing the method according to any one of the fourteenth aspect and the possible implementations of the fourteenth aspect.

Optionally, the system may further include a terminal device and/or a first MBS authentication and authorization function.

### BRIEF DESCRIPTION OF DRAWINGS

FIG. 1a and FIG. 1b are each a schematic architectural diagram of an MBS user service;
FIG. 2a is a schematic diagram of a registration procedure of an MBS user service;
FIG. 2b is a schematic diagram of a procedure for obtaining an MBS key;
FIG. 3a, FIG. 3b, and FIG. 3c are each a schematic architectural diagram of an MBS (service) applicable to an embodiment of this application;
FIG. 4, FIG. 5, and FIG. 6A and FIG. 6B are each a schematic diagram of a registration procedure applicable to an embodiment of this application;
FIG. 7, FIG. 8, and FIG. 9 are each a schematic diagram of a registration procedure applicable to an embodiment of this application;
FIG. 10, FIG. 11, and FIG. 12A and FIG. 12B are each a schematic diagram of a registration procedure applicable to an embodiment of this application;
FIG. 13 and FIG. 14A to FIG. 14C are each a schematic diagram of a registration procedure applicable to an embodiment of this application; and
FIG. 15 and FIG. 16 are each a schematic diagram of a structure of a registration apparatus applicable to an embodiment of this application.

### DESCRIPTION OF EMBODIMENTS

The following further describes the present invention in detail with reference to the accompanying drawings.

Technical solutions in embodiments of this application may be applied to various communication systems, for example, a 4G system (where the 4G system includes a long term evolution (long term evolution, LTE) system and a worldwide interoperability for microwave access (worldwide interoperability for microwave access, WiMAX) communication system), a future 5G system such as a new-generation radio access technology (new radio access technology, NR), and a future communication system such as a 6G system.

All aspects, embodiments, or features are presented in this application by describing a system that may include a plurality of devices, components, modules, and the like. It should be appreciated and understood that, each system may include another device, component, module, and the like, and/or may not include all devices, components, modules, and the like discussed with reference to the accompanying drawings. In addition, a combination of these solutions may be used.

In addition, the word "example" in embodiments of this application is used to represent giving an example, an illustration, or a description. Any embodiment or design scheme described as an "example" in this application should not be explained as being more preferred or having more advantages than another embodiment or design scheme. Exactly, the term "example" is used to present a concept in a specific manner.

A network architecture and a service scenario described in embodiments of this application are intended to describe the technical solutions in embodiments of this application more clearly, and do not constitute a limitation on the technical solutions provided in embodiments of this application. A person of ordinary skill in the art may know that: With the evolution of the network architecture and the emergence of new service scenarios, the technical solutions provided in embodiments of this application are also applicable to similar technical problems.

The following describes some terms in embodiments of this application, to facilitate understanding of a person skilled in the art.
(1) A terminal device includes a device that provides a voice and/or data connectivity for a user. Specifically, the terminal device includes a device that provides a voice for the user, includes a device that provides data connectivity for the user, or includes a device that provides a voice and data connectivity for the user. For example, the terminal device may include a handheld device having a wireless connection function, or a processing device connected to a wireless modem. The terminal device may communicate with a core network via a radio access network (radio access network, RAN), and exchange a voice or data with the RAN, or interact a voice and data with the RAN. The terminal device may include user equipment (user equipment, UE), a wireless terminal device, a mobile terminal device, a device-to-device (device-to-device, D2D) terminal device, a vehicle-to-everything (vehicle-to-everything, V2X) terminal device, a machine-to-machine/machine-type communication (machine-to-machine/machine-type communication, M2M/MTC) terminal device, an internet of things (internet of things, IoT) terminal device, a light terminal device (light UE), a subscriber unit (subscriber unit), a subscriber station (subscriber station), a mobile station (mobile station), a remote station (remote station), an access point (access point, AP), a remote terminal (remote terminal), an access terminal (access terminal), a user terminal (user terminal), a user agent (user agent), a user device (user device), or the like. For example, the terminal device may include a mobile phone (or referred to as a "cellular" phone), a computer with a mobile terminal device, or a portable, pocket-sized, handheld, or computer built-in mobile apparatus. For example, the terminal device is a device such as a personal communications service (personal communications service, PCS) phone, a cordless phone, a session initiation protocol (session initiation protocol, SIP) phone, a wireless local loop (wireless local loop, WLL) station, or a personal digital assistant (personal digital assistant, PDA). The terminal device may alternatively include a limited device, for example, a device with low power consumption, a device with a limited storage capability, or a device with a limited computing capability. For example, the terminal device includes an information sensing device, such as a barcode, radio frequency identification (radio frequency identification, RFID), a sensor, a global positioning system (global positioning system, GPS), or a laser scanner.

As an example instead of a limitation, in embodiments of this application, the terminal device may alternatively be a wearable device. The wearable device may also be referred to as a wearable intelligent device, an intelligent wearable device, or the like, and is a general term of wearable devices that are intelligently designed and developed for daily wear by using a wearable technology, for example, glasses, gloves, watches, clothes, and shoes. The wearable device is a portable device that can be directly worn on the body or integrated into clothes or an accessory of a user. The wearable device is not only a hardware device, but also implements a powerful function through software support, data exchange, and cloud interaction. In a broad sense, wearable intelligent devices include full-featured and large-sized devices that can implement all or a part of functions without depending on smartphones, for example, smart watches or smart glasses, and include devices that dedicated to only one type of application function and need to collaboratively work with other devices such as smartphones, for example, various smart bands, smart helmets, or smart jewelry for monitoring physical signs.

If the various terminal devices described above are located in a vehicle (for example, placed in the vehicle or mounted in the vehicle), the terminal devices may be all considered as vehicle-mounted terminal devices. For example, the vehicle-mounted terminal devices are also referred to as on-board units (on-board units, OBUs).

In embodiments of this application, the terminal device may further include a relay (relay). Alternatively, it is understood as that any device that can perform data communication with a base station may be considered as a terminal device.

In embodiments of this application, an apparatus configured to implement a function of the terminal device may be a terminal device, or may be an apparatus, for example, a chip system, that can support the terminal device in implementing the function. The apparatus may be mounted in the terminal device. In embodiments of this application, the chip system may include a chip, or may include the chip and another discrete component. In the technical solutions provided in embodiments of this application, the technical solutions provided in embodiments of this application are described by using an example in which the apparatus configured to implement the function of the terminal is the terminal device.

(2) A network device includes, for example, an access network (access network, AN) device such as a base station (for example, an access point), and may be a device that is in an access network and that communicates with a wireless terminal device over an air interface through one or more cells. Alternatively, for example, a network device in a vehicle-to-everything (vehicle-to-everything, V2X) technology is a road side unit (road side unit, RSU). The base station may be configured to perform mutual conversion between a received over-the-air frame and an IP packet, and serve as a router between the terminal device and a remaining part of the access network. The remaining part of the access network may include an IP network. The RSU may be a fixed infrastructure entity supporting a V2X application, and may exchange a message with another entity supporting the V2X application. The network device may further coordinate attribute management of the air interface. For example, the network device may include an evolved NodeB (NodeB, eNB, or e-NodeB, evolved NodeB) in a long term evolution (long term evolution, LTE) system or a long term evolution-advanced (long term evolution-advanced, LTE-A) system, may include a next generation NodeB (next generation NodeB, gNB) in a 5th generation mobile communication technology (5th generation, 5G) NR system (also briefly referred to as an NR system), or may include a central unit (central unit, CU) and a distributed unit (distributed unit, DU) in a cloud radio access network (cloud radio access network, Cloud RAN) system. This is not limited in embodiments of this application.

Certainly, the network device may further include a core network device. For example, the core network device includes an access and mobility management function (access and mobility management function, AMF) or a user plane function (user plane function, UPF).

In an MBS (service) scenario, the network device may specifically include one or more of the following: a first session management function, a first MBS authentication and authorization function, a UPF, a first MBS user plane function, a unified data management function (unified data management, UDM), a unified data repository (unified data repository, UDR), or an access and mobility management function.

The first session management function may be any session management function that supports the MBS, and include but not limited to a session management function (session management function, SMF), a multicast-broadcast (multicast-broadcast, MB)-SMF, an anchor session management function of the MBS, a control session management function of the MBS, an intermediate session management function (intermediate-SMF, I-SMF), and the like. The access and mobility management function may be any access and mobility management function that supports the MBS, and include but not limited to an AMF and an MB-AMF. The first MBS authentication and authorization function includes but is not limited to a multicast service function control plane (multicast service function control plane, MSF-C), a network exposure function (network exposure function, NEF), an application function (application function, AF), a multicast/broadcast service function (multicast/broadcast service function, MBSF), an authentication, authorization, and accounting (authentication, authorization, and accounting, AAA) server, a UDM, a UDR, or a policy control function (policy control function, PCF). The first MB S user plane function includes but is not limited to a multicast service function user plane (multicast service function user plane, MSF-U), a multicast/broadcast service user plane function (multicast/broadcast service user plane, MBSU), a UPF, or the like.

(3) Terms "system" and "network" may be used interchangeably in embodiments of this application. "At least one" means one or more, and "a plurality of" means two or more. A term "and/or" describes an association relationship between associated objects and indicates that three relationships may exist. For example, A and/or B may indicate the following cases: Only A exists, both A and B exist, and only B exists, where A and B may be singular or plural. The character "/" usually indicates an "or" relationship between the associated objects. "At least one item (piece) of the following" or a similar expression thereof means any combination of these items, including a singular item (piece) or any combination of plural items (pieces). For example, at least one (piece) of a, b, or c may represent: a, b, c, a-b, a-c, b-c, or a-b-c, where a, b, and c may be singular or plural.

In addition, unless otherwise stated, ordinal numbers such as "first" and "second" in embodiments of this application are for distinguishing between a plurality of objects, but are not intended to limit an order, a time sequence, priorities, or importance of the plurality of objects. For example, a first data packet and a second data packet are merely used to distinguish between different data packets, but do not indicate a difference in content, priorities, a sending order, importance, or the like of the two data packets.

For ease of understanding of embodiments of this application, an application scenario used in this application is first described.

The terminal device may discover an available MBS user service by using an MBS user service discovery mechanism, determine information about the MBS user service, and determine whether security protection needs to be performed on the MBS user service. When security protection needs to be performed on the MBS user service, the terminal device needs to register the MBS user service. Through registration of the MBS user service, mutual authentication may be implemented between the terminal device and the network device, and the network device may authorize the MBS user service joined by the terminal device. In addition, the network device may determine the terminal device and information (such as address information) of the terminal device. An authentication process between the terminal device and the network device may be completed by using a security credential (security credential). The security credential may vary as an authentication method varies. To implement security protection of the MBS user service, the network device may further send, to the terminal device, a key used by the MBS user service.

An MBS (service) and an MBS (service) architecture for 3G and 4G are defined in the 3GPP standards 22.146 and 23.246. The MBS (service) is a point-to-multipoint bearer service, used to send data from a single data source to a plurality of receivers. The MBS (service) includes a multicast service and a broadcast service.

An MBS user service is defined in the 3GPP standard 22.246, and is a service provided by an operator for a subscribed user. The MBS user service is based on the MBS (service). One MBS user service can use one or more MBS (service)s at the same time.

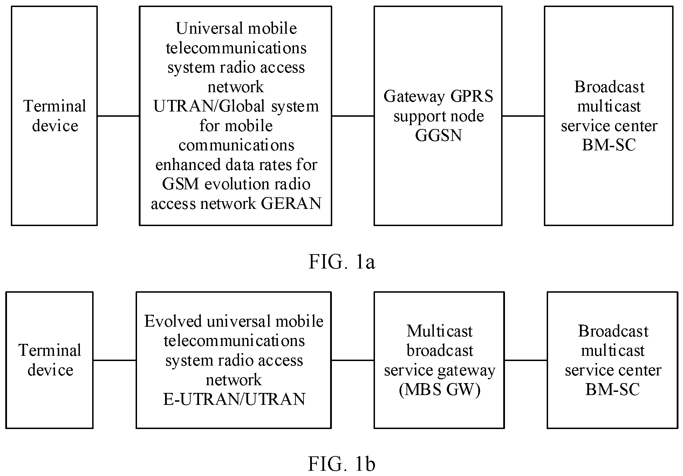

A registration procedure of the MBS user service in a 3G system and a 4G system is defined in the 3GPP standard 33.246. Network elements in the registration procedure of the MBS user service in the 3G system are shown in FIG. 1a, and include a terminal device, a universal mobile telecommunications system radio access network (UMTS terrestrial radio access network, UTRAN)/global system for mobile communications enhanced data rates for GSM evolution radio access network (GSM EDGE radio access network, GERAN), a gateway GPRS support node (gateway GPRS support node, GGSN), and a broadcast multicast service center (broadcast multicast service center, BM-SC). Network elements in the registration procedure of the MBS user service in the 4G system are shown in FIG. 1b, and include a terminal device, an evolved UTRAN (evolved-UTRAN, E-UTRAN)/UTRAN, a multicast and broadcast service gateway (multicast and broadcast service gateway, MBS GW), and a BM-SC.

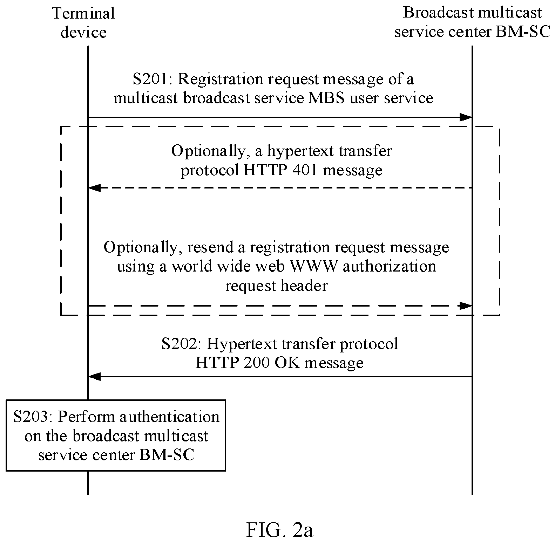

The registration procedure of the MBS user service in the 3G system and the 4G system is shown in FIG. 2a, and includes the following steps.

S201: The terminal device sends a registration request message of the MBS user service to the BM-SC. The registration request message carries identification information of the MBS user service and indication information indicating that the terminal device requests to register with the MBS user service.

The terminal device may send the registration request message to the BM-SC via the UTRAN/GERAN, or the terminal device may send the registration request message to the BM-SC via the E-UTRAN/UTRAN.

The registration request message may be protected by using an MBS request key (MBS request key, MRK), and both the terminal device and the BM-SC may obtain the MRK.

S202: The BM-SC verifies the received registration request message by using the MRK; if the authentication succeeds, the BM-SC verify whether the terminal device is authorized to register with the MBS user service corresponding to the identification information of the MBS user service; and if the terminal device is authorized to register with the MBS user service, the BM-SC sends an HTTP 200 OK message to the terminal device, to indicate that the registration request is successful.

The HTTP 200 OK message is protected by using the MRK.

Optionally, if the registration request message does not use a world wide web (world wide web, WWW) authorization request header (authorization request header) the MB-SC determines that verification of the registration request message fails, and the MB-SC sends an HTTP 401 message to the terminal device. The HTTP 401 message carries a WWW-authentication header (Authentication header). After the terminal device receives the HTTP 401 message, the terminal device resends the registration request message that uses the WWW authorization request header.

S203: The terminal device authenticates the BM-SC by verifying the HTTP 200 OK message.

If security protection needs to be performed on an MBS user service, the MBS user service needs to use a key, and the key includes an MBS service key (MBS service key, MSK) and an MBS traffic key (MBS traffic key, MTK). The MSK and MTK are generated by the BM-SC or the AF. The MSK is used to protect transmission of the MTK, and the MTK is used to protect MBS (service) data. When the BM-SC or the AF sends the MSK to the terminal device, protection may be performed based on a key (for example, an MRK) used by the terminal device and the BM-SC in a registration process. When sending the MTK to the terminal device, the BM-SC or the AF may use the MSK for protection. When sending the MBS (service) data to the terminal device, the BM-SC or the AF may use the MTK for protection.

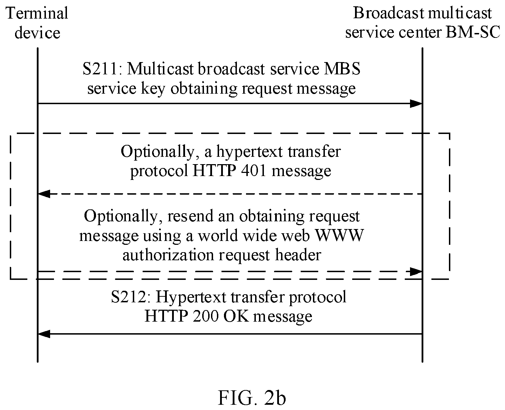

As shown in FIG. 2b, an obtaining procedure of the MSK includes the following steps.

S211: The terminal device sends an MSK obtaining request message to the BM-SC. The MSK obtaining request message carries identification information of the MSK.

The terminal device may send the MSK obtaining request message to the BM-SC via the UTRAN/GERAN, or the terminal device may send the MSK obtaining request message to the BM-SC via the E-UTRAN/UTRAN.

The MSK obtaining request message may be protected by using a key (for example, an MRK).

Optionally, when finding that the MSK needs to be obtained, the terminal device may send the MSK obtaining request message to the BM-SC. Alternatively, the BM-SC indicates the terminal device to obtain the MSK, and the terminal device sends the MSK obtaining request message to the BM-SC.

S212: The BM-SC performs verification (where for example, verification is performed by using the MRK) on the received MSK obtaining request message, and if the verification succeeds, the BM-SC sends an HTTP 200 OK message to the terminal device. The HTTP 200 OK message includes the MSK.

Optionally, if the WWW authorization request header is not used in the MSK obtaining request message, the MB-SC sends an HTTP 401 message to the terminal device. The HTTP 401 message carries the WWW-authentication header. After the terminal device receives the HTTP 401 message, the terminal device resends the MSK obtaining request message that uses the WWW authorization request header.

If security protection needs to be performed for an MBS user service, the BM-SC further sends an MTK to the terminal device. The MTK is protected by using the MSK in a transmission process. The MTK is used to protect data of the MBS user service.

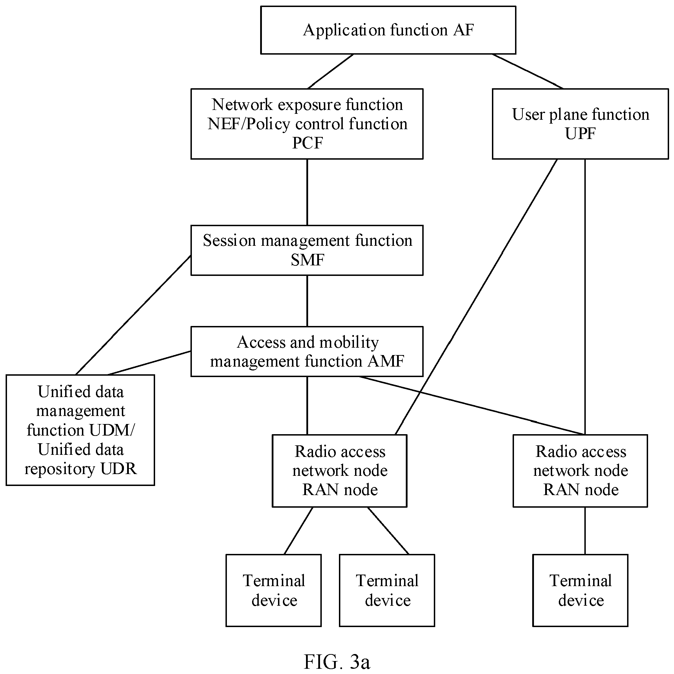

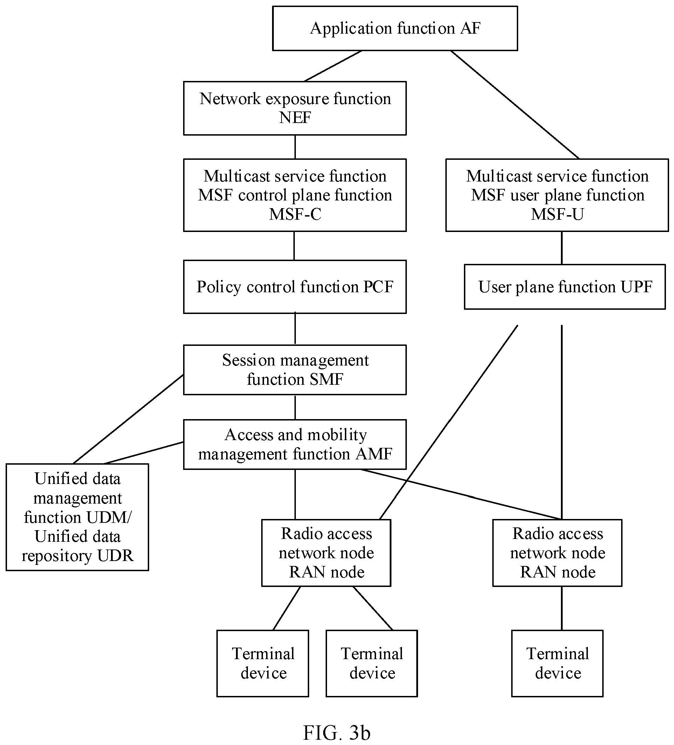

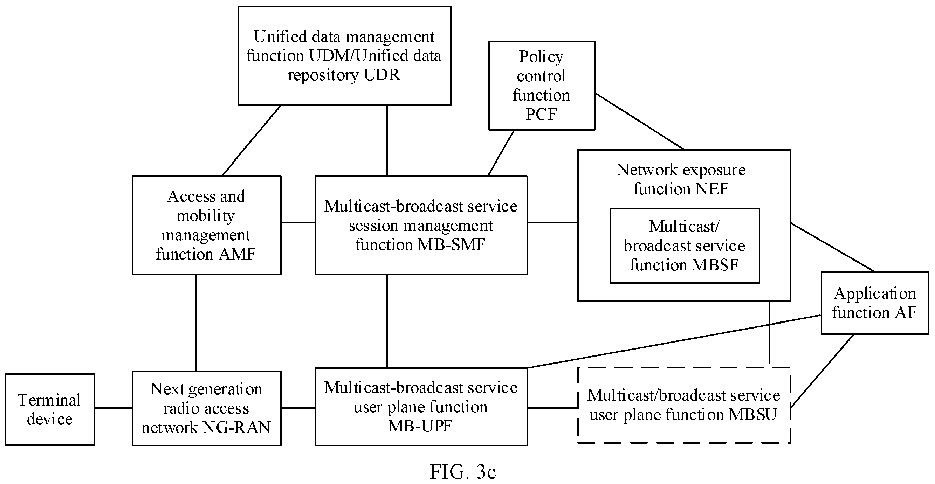

An MBS architecture in a 5G system is proposed in the 3GPP project research report 23.757, and includes an MBS baseline architecture 1 shown in FIG. 3a or FIG. 3b and an MBS baseline architecture 2 shown in FIG. 3c.

Based on a current 5G architecture, the MBS baseline architecture 1 enhances some network functions (network functions, NFs) in the 5G architecture. As shown in FIG. 3a, the MBS baseline architecture 1 includes but is not limited to an AF, a NEF, a policy control function (policy control function, PCF), an SMF, an AMF, a UPF, a UDM or a UDR, a radio access network node (radio access network node, RAN node), and a terminal device.

The AF is a multicast and/or broadcast data source, invokes an MBS provided by the 5G system, and sends multicast and/or multicast data to a plurality of terminal devices via a 5G network.

The NEF is an NEF based on the current 5G architecture, and enhances functions of a NEF in the current 5G architecture. The enhanced functions include exposure of a 5G MBS and a negotiation with the AF for the 5G MBS. Negotiated content includes quality of service (Quality of Service, QoS), 5G MBS (service) domain, and the like.

The PCF is a PCF based on the current 5G architecture and enhances functions of a PCF in the current 5G architecture. The enhanced functions include exposure of the 5G MBS, provision of an MBS session policy to the SMF, and obtaining MBS (service) information from the AF. The "obtaining MBS (service) information from the AF" may be that the PCF obtains the MBS (service) information from the AF directly or indirectly (for example, via the NEF).

The SMF is an SMF based on the current 5G architecture, and enhances functions of an SMF in the current 5G architecture. Enhanced functions include controlling MBS transmission based on the MBS session policy obtained from the PFC, configuring an MBS flow and point-to-point or point-to-multipoint transmission on the UPF, configuring the MBS flow and QoS information on the RAN node, and configuring session management for the MBS flow on the terminal device.

The AMF is configured to manage access and mobility of UE, and specifically includes functions such as UE registration, UE mobility management, NAS connection, access authentication and authorization, and transmission for the UE and the SMF.

The UPF is a UPF based on the current 5G architecture, and enhances functions of a UPF in the current 5G architecture. Enhanced functions include support for (data) packet filtering of the MBS flow, transmission of the MBS flow to the RAN node through point-to-point or point-to-multipoint, obtaining an MBS configuration from SMF, checking an internet group management protocol (Internet Group Management Protocol, IGMP) packet, notification of the IGMP packet to the SMF, and reception of a unicast flow or a multicast/multicast flow from the AF.

The UDM/UDR is a UDM/UDR based on the current 5G architecture and enhances functions of a UDM/UDR in the current 5G architecture, including management of subscription data of an MBS (service).

The RAN node may be understood as an access network device (for example, a base station), is a RAN node based on the current 5G architecture, and enhances functions of a RAN node in the current 5G architecture. The enhanced functions include: reception of an MBS flow from the UPF, switching transmission of the MBS flow in multicast and unicast, and the like.

The terminal device is a terminal device based on the current 5G architecture and enhances functions of a terminal device in the current 5G architecture. The enhanced functions include support for configuration of the MBS policy, support for session management of the MBS flow, support for addition of the MBS flow, and MBS support of an access stratum.

Corresponding to the MBS baseline architecture 1 shown in FIG. 3a, as shown in FIG. 3b, the 3GPP research project report 23.757 further proposes an MBS baseline architecture 1 having a multicast service function (multicast service function, MSF). The AF uses an MBS provided by the 5G system via the MSF. The MSF requests the MBS via the NEF or the PCF. The MSF is an entry point for control plane signaling and user plane data. The MSF may include an MSF-C and an MSF-U. The MSF-C is configured to process signaling and receive signaling, including a multicast service configuration, MBS bearer activation, and the like. The MSF-U is configured to perform user plane data transmission, user plane data coding, and the like.

As shown in FIG. 3c, a new NF is used in the MBS baseline architecture 2 based on a current 5G architecture, and a function of an existing NF is enhanced to support the MBS.

Functions of a terminal device, a next generation radio access network (Next Generation-Radio Access Network, NG-RAN), an AMF, and a PCF are enhanced. The NG-RAN may be understood as a RAN node in the 5G architecture, for example, a base station.

An MB-SMF and an MB-UPF are added. The MB-SMF is configured to perform MBS session management, and the MB-UPF is configured to transmit multicast and broadcast data, and the like.

An MBSF is added to transmit and process MB S-related signaling between an AF and a 5G core network. The MBSF may be an independently deployed NF, or may be deployed as a part of the NEF shown in FIG. 3c.

Optionally, an MBSU is added, and is configured to transmit the multicast and broadcast data.

In embodiments of this application, an MBS-C is an MBS (service) layer control plane function, and may be the MSF-C in the MBS baseline architecture 1 or may be the MBSF in the MBS baseline architecture 2. An MBS-U is a 5G MBS (service) layer user plane function, and may be the MSF-U in the MBS baseline architecture 1 or the MBSU in the MBS baseline architecture 2. Alternatively, the SMF may be the MB-SMF. Alternatively, the UPF may be the MB-UPF.

It can be learned that the MBS architecture in the 5G system is different from the MBS architecture in the 3G and 4G systems, and the network elements in the 5G system are also different from the network elements in the 3G and 4G systems. For example, in the 3G system and the 4G system, the terminal device and the BM-SC perform signaling communication via a user plane. In the MBS architecture of the 5G system, a control plane channel is used to transmit signaling, and a new network element may further be used. Therefore, the registration procedure of the MBS user service in the 3G and 4G systems (to be specific, authentication performed between the terminal device and the network device and authorization performed by the network device on the MBS user service joined by the terminal device) is not applicable to the 5G system, and a registration procedure of the MBS user service in the 5G system is not provided in an existing communication standard.

Based on this, this application proposes a registration method to define an MBS user service registration method in a new MBS architecture (a new 5G architecture for short below) in a 5G system. Specifically, the MBS user service registration method provided by this application defines authentication between a terminal device and a network device, a method for authorizing, by the network device, an MBS (service) joined by the terminal device, a method for obtaining a key of the MBS user service by the terminal device, and a method for processing a security policy of the MBS user service, when the terminal device joins an MBS user service.

One MBS user service uses one or more MBS (service)s. The terminal device joins the MBS user service, to be specific, the terminal device joins the MBS (service), or the terminal device establishes an MBS session. Therefore, the MBS user service registration method proposed by this application may also defines authentication between the terminal device and the network device, a method for authorizing, by the network device, an MBS (service) joined by (or an MBS session established by) the terminal device, a method for obtaining a key of the MBS (service) by the terminal device, and a method for processing a security policy of the MBS (service) when the terminal device joins the MBS (service) (or establishes the MBS session).

In embodiments of this application, for brevity of description, "MBS (service) authentication and authorization of a terminal device" is used, which refers to one of the following:
authentication between the terminal device and the network device, and authentication performed by the network device on the terminal device joining the MBS (service) (or establishing the MBS session) when the terminal device joins the MBS (service) (or establishes the MBS session);
authentication performed by the network device on the terminal device, and authentication performed by the network device on the terminal device joining the MBS (service) (or establishing the MBS session) when the terminal device joins the MBS (service) (or establishes the MBS session);
authentication between the terminal device and the network device, and authentication performed by the network device on the terminal device joining the MBS subscriber service when the terminal device joins the MBS user service; or
authentication performed by the network device on the terminal device, and authentication performed by the network device on the terminal device joining the MBS user service when the terminal device joins the MBS user service.

In this application, the MBS user service and the MBS (service) may be used alternately.

In this application, both a key of the MBS (service) and a key of the MBS user service are used to protect messages and/or data related to multicast or broadcast, and may be used alternately.

In this application, the key of the MBS (service) is used to protect a message related to the MBS (service) (or MBS user service) and/or data related to MBS (service). The message related to the MBS (service) (or the MBS user service) is a control plane message of the MBS (service) (or the MBS user service). The data related to the MBS (service) (or the MBS user service) is user plane data of the MBS (service) (or the MBS user service). The key of the MBS (service) may alternatively include an MSK and/or an MTK. The MSK is used to protect transmission of the MTK. A network device function protects the message or data related to the MBS (service), including: The network device may encrypt the message or data related to the MBS (service), and/or the network device function performs integrity protection on the message of the MBS (service).

In this application, both a security policy of the MBS (service) and a security policy of the MBS user service define protection policies for multicast or broadcast data, and may be used alternately.

The registration method of the MBS user service is described in detail below by using a plurality of embodiments. The registration method provided in embodiments of this application may be implemented based on the MBS baseline architecture 1 and/or the MBS baseline architecture 2. That is, the registration method provided in embodiments of this application is applicable to the MBS baseline architecture 1 and the MBS baseline architecture 2.

### Embodiment 1

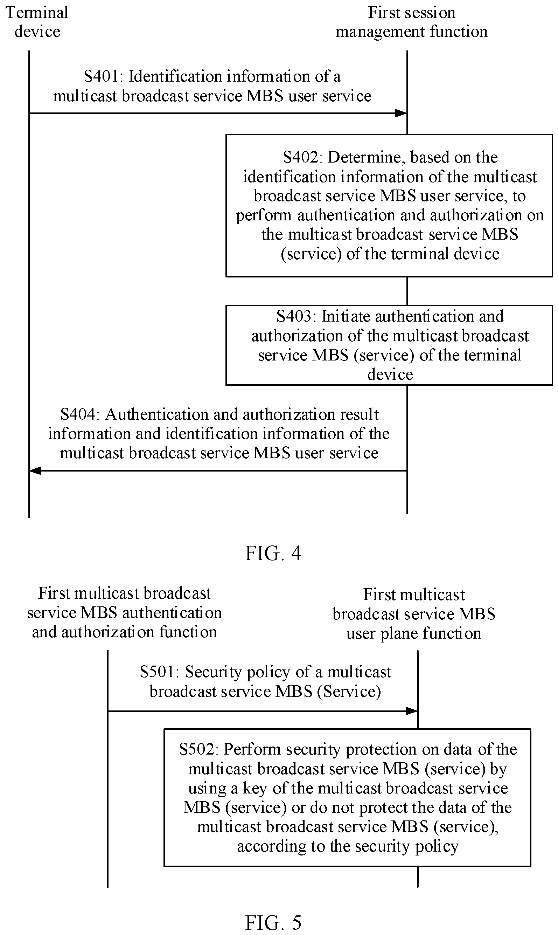

In Embodiment 1.1, a first session management function determines whether to perform authentication and authorization on an MBS (service) of a terminal device, and if determining to perform authentication and authorization on the MBS (service) of the terminal device, the first session management function initiates the authentication and authorization on the MBS (service) of the terminal device, to implement authentication and authorization on the MBS (service) in a new 5G architecture. As shown in FIG. 4, the following steps are included.

S401: The terminal device sends identification information of the MBS (service) to the first session management function, and the first session management function receives the identification information of the MBS (service).

The first session management function may be an SMF or an MB-SMF.

Specifically, the terminal device sends, to the first session management function, a message that carries the identification information of the MBS (service), where the message requests to establish or modify a session.

In this application, a request for establishing or modifying a session, a request for establishing or modifying an MBS session, a request for joining or using an MBS (service), a request for registering an MBS (service), a request for activating an MBS session context, and a request for creating an MBS session context have the same meaning and may be used alternately.

The identification information of the MBS (service) may also be referred to as an MBS (service) identifier (MBS Service Identifier, MBS Service ID), and identifies an MBS (service) or an MBS user service. The identification information of the MBS (service) may be one or more of a multicast/broadcast internet protocol (internet protocol, IP) address of the MBS (service) (or the MBS user service), a temporary mobile group identifier (temporary mobile group identifier, TMGI), a multicast/broadcast IP address and a port, single network slice selection assistance information (Single Network Slice Selection Assistance Information, S-NSSAI), a multicast/broadcast IP address and a port and an access point name, a multicast/broadcast IP address and an access point name, or a data network identifier. The access point name (Access Point Name, APN) may also be referred to as an access point network (Access Point Network). Optionally, the message that carries the identification information of the MBS (service) may further include a first identifier of the terminal device, and the first session management function receives the first identifier of the terminal device. The first identifier may be an MBS user ID. The first identifier of the terminal device may be one of an identifier used when the terminal device uses the MBS (service), an identifier used when the terminal device joins or uses the MBS (service) (or the MBS user service), an identifier used when authentication and authorization are performed on the MBS (service) of the terminal device, or an identifier of an application layer key of the terminal device. Herein, the application layer key of the terminal device is a key used when the terminal device communicates with a first MBS authentication and authorization function, and the identifier of the application layer key of the terminal device is an implicit manner of identifying the terminal device. Manners in which the terminal device and the first MBS authentication and authorization function obtain the identifier of the application layer key of the terminal device and the key used when the terminal device communicates with the first MBS authentication and authorization function are not limited in embodiments of this application.

In this application, the first identifier of the terminal device may also be referred to as a first application identifier of the terminal device, a first application identifier, a first identifier of the terminal device, or an MBS user ID. The first application identifier of the terminal device, the first application identifier, the first identifier of the terminal device, the first identifier, or the MBS user ID may be alternately used.

In this application, the first identifier of the terminal device may be one of the identifier used when the terminal device uses the MBS (service), the identifier used when the terminal device joins or uses the MBS (service) (or the MBS user service), the identifier used when authentication and authorization are performed on the MBS (service) of the terminal device, or the identifier of the application layer key of the terminal device.

In an implementation, the message that carries the identification information of the MBS (service) requests to establish or modify the session, and the message that carries the identification information of the MBS (service) may be a protocol data unit (protocol data unit, PDU) session establishment or modification request message. The PDU session establishment or modification request message requests to establish or modify a PDU session. The PDU session establishment or modification request message includes the identification information (MBS Service ID) of the MBS (service). Optionally, the PDU session establishment or modification request message may further include the MBS user ID. It may be understood that the PDU session may be specifically an MBS PDU session, which is referred to as an MBS session or a session for short.

Optionally, the PDU session establishment or modification request message may further include the S-NSSAI and/or a data network name (data network name, DNN). The S-NSSAI is a slice used by the MBS (service), and the DNN identifies a data network in which the MBS (service) is located or used.

In this implementation, the terminal device sends, to the first session management function via an access and mobility management function (for example, an AMF), the message that carries the MBS service ID. To be specific, the terminal device sends the message that carries the MBS service ID to the access and mobility management function. After receiving the message that carries the MBS service ID, the access and mobility management function sends the message that carries the MBS service ID to the first session management function.

In another implementation, the message that carries the identification information of the MBS (service) requests to join or use the MBS (service) (or the MBS user service), and the message that carries the identification information of the MBS (service) may be an IGMP join message, a multicast listener report (multicast listener report, MLR) message, or a multicast listener report join (multicast listener report join, MLP Join) message. The IGMP join message, the MLR message, or the MLP join message includes the MBS service ID. The IGMP join message, the MLR message, or the MLP join message requests to join or use the MBS (service) corresponding to the MBS service ID, requests to obtain data of the MBS (service) corresponding to the MBS service ID, or requests to join a multicast group corresponding to the MBS service ID.

In this implementation, the terminal device sends the MBS service ID to a user plane function UPF. After receiving the MBS service ID, the user plane function UPF sends a notification message to the first session management function, where the notification message carries the received MBS service ID.

In still another implementation, the message that carries the identification information of the MBS (service) requests to join, create, or modify an MBS session, requests registration of the MBS user service, or requests activation of the MBS session context.

In this implementation, the terminal device sends the MBS service ID to the access and mobility management function (for example, the AMF). The access and mobility management function receives the MBS service ID, and sends the MBS service ID to the first session management function.

S402: The first session management function determines, based on the identification information of the MBS (service), to perform authentication and authorization on the MBS (service) of the terminal device.

In S402, the first session management function determines, based on subscription data of the MBS (service) corresponding to the identification information of the MBS (service), to perform authentication and authorization on the MBS (service) of the terminal device. For example, the first session management function determines, based on an MBS authentication and authorization indication in the subscription data of the MBS (service), to perform authentication and authorization on the MBS (service) of the terminal device.

In an implementation, the first session management function locally stores the subscription data of the MBS (service). The first session management function may locally obtain, based on the MBS service ID, the subscription data of the MBS (service) corresponding to the MBS service ID.

In another implementation, the first session management function obtains the subscription data of the MBS (service) from a UDM or a UDR.

For example, the first session management function may send, to the UDM or the UDR, a message requesting the subscription data of the MBS (service), for example, a Nudm_SDM_Get request message. The message includes the MBS service ID, and optionally includes a requested message type. The requested message type may indicate that the requested subscription data is MBS-related subscription data.

Optionally, when the subscription data is not stored locally, the first session management function may obtain the subscription data of the MBS (service) from the UDM or the UDR.

When the UDM or the UDR returns the subscription data of the MBS (service):
(a) If the UDM or the UDR receives the MBS service ID, the UDM or the UDR returns, based on the MBS service ID, subscription data of the MBS (service) identified by the MBS service ID.
(b) If the UDM or the UDR receives the requested message type and the MBS service ID, the UDM or the UDR determines, based on the requested message type, that the requested subscription data is subscription data related to the MBS (service), and the UDM or the UDR returns, based on the MBS service ID, the subscription identifier of the MBS (service) corresponding to the MBS service ID.

S403: The first session management function initiates the authentication and authorization on the MBS (service) of the terminal device.

Optionally, in S403, the first session management function may further send a first message to the terminal device, and the terminal device receives the first message. The first message includes the MBS service ID, and the first message is used to: notify or request the terminal device to perform authentication and authorization on the MBS (service), or request to obtain the first identifier of the terminal device. For example, if an authentication and/or authorization method based on an extensible authentication protocol (extensible authentication protocol, EAP) is used, the first message may be an EAP request/identity message, and requests an EAP ID (that is, requests the MBS user ID).

After receiving the MBS service ID, the terminal device may determine, based on the MBS service ID, an EAP ID used by the terminal device, and respond to the first message. The terminal device sends a second message to the first session management function, and the first session management function receives the second message from the terminal device. The second message includes the MBS service ID and the first identifier (MBS User ID) of the terminal device, and the first identifier may be an identifier used when the terminal device uses the MBS (service). For example, the second message may be an EAP response/identity message, and is used to send the EAP ID. That is, the EAP response/identity message is a message carrying the MBS user ID.

In S403, the first session management function sends a third message to the first MBS authentication and authorization function. The third message includes the MBS service ID and the first identifier of the terminal device. The third message requests to perform authentication and authorization on the MBS (service) of the terminal device. Optionally, the third message may further include identification information of the terminal device. In this application, the identification information of the terminal device may also be considered as a second identifier of the terminal device, the identification information of the terminal device identifies the terminal device, and the identification information of the terminal device may include one or more of the following: a subscription permanent identifier (subscription permanent identifier, SUPI) of the terminal device, a generic public user identifier (generic public subscription identifier, GPSI) of the terminal device, and/or an IP address of the terminal device.

In this application, the first MBS authentication and authorization function may be an MBS-C, a NEF, an MSF-C, an AF, an MBSF, an AAA server, a PCF, a UDM, or a UDR. Optionally, if the first MBS authentication and authorization function is the MBS-C, the NEF, the PCF, the UDM, or the UDR, the identification information of the terminal device included in the third message may be the SUPI or the GPSI of the terminal device. If the first MBS authentication and authorization function is the AF or the AAA server, and the AF or the AAA server belongs to a third party, the identification information of the terminal device included in the third message may be the GPSI or the IP address of the terminal device; or if the AF or the AAA server belongs to an operator, the identification information of the terminal device included in the third message may be the SUPI or the GPSI of the terminal device.

It should be noted that, in this application, if the first MBS authentication and authorization function belongs to the third party, a message may be sent between the first session management function and the first MBS authentication and authorization function via the UPF/NEF/proxy (Proxy). To be specific, the first session management function sends the message to the UPF/NEF/Proxy, and the UPF/NEF/Proxy sends the received message to the first MBS authentication and authorization function. The first MBS authentication and authorization function sends the message to the UPF/NEF/Proxy, and the UPF/NEF/Proxy sends the received message to the first session management function.

The first MBS authentication and authorization function may send a fourth message to the first session management function, and the first session management function receives the fourth message from the first MBS authentication and authorization function. The fourth message includes authentication and authorization result information and the MBS service ID.

The authentication and authorization result information in this application includes an authentication and authorization result, or the authentication and authorization result and a validity period of the authentication and authorization result. The authentication and authorization result includes success or failure. For example, the authentication and authorization result indicates that authentication and authorization on the MBS (service) of the terminal device succeeds or fails, that the terminal device successfully or fails to request or join the MBS (service) or the MBS user service, or that the terminal device successfully or fails to register the MBS user service.

Optionally, the fourth message may further include the identification information of the terminal device and/or the first identifier of the terminal device.

Optionally, the fourth message may further include key information of the MBS (service). In this application, the key information of the MBS (service) is: a key of the MBS (service), the key and a key identifier (Identifier, ID) of the MBS (service), the key of the MBS (service) and a validity period of the key, or the key identifier of the key of the MBS (service) and the validity period of the key. The key of the MBS (service) includes an MTK and/or an MSK, and the key identifier of the MBS (service) includes an MTK ID and/or an MSK ID.

Certainly, the key information of the MBS (service) may alternatively be carried in another message.

If the EAP authentication and/or authorization method is used, the first MBS authentication and authorization function sends an EAP success (Success) message after the authentication and authorization succeeds. That is, the authentication and authorization result included in the fourth message is an EAP success message. After the authentication and authorization result is failure, the first MBS authentication and authorization function sends an EAP failure (Failure) message. That is, the authentication and authorization result included in the fourth message is an EAP failure message.

S404: The first session management function sends the authentication and authorization result information and the identification information (MBS Service ID) of the MBS (service) to the terminal device, and the terminal device receives the authentication and authorization result information and the MBS service ID.

Optionally, the first session management function may further send the authentication and authorization result information, the MBS service ID, and the identification information of the terminal device, or the authentication and authorization result information, the MBS service ID, the identification information of the terminal device, and the first identifier of the terminal device to the UDM/LTDR.

If the fourth message includes the validity period of the authentication and authorization result, the first session management function may further release a session of the MBS (service) of the terminal device based on the validity period of the authentication and authorization result. For example, the first session management function releases the session of the MBS (service) of the terminal device after the authentication and authorization result expires or is invalid.

Optionally, if the fourth message includes the key information of the MBS (service), the first session management function may further send the key information of the MBS (service) to the terminal device.

It should be noted that, in this embodiment of this application, communication between the first session management function and the terminal device may be completed via the access and mobility management function (for example, the AMF). That is, the first session management function sends a message A to the terminal device. To be specific, the first session management function sends the message A to the access and mobility management function, the access and mobility management function receives the message A, the access and mobility management function sends the message A to the terminal device, and the terminal device receives the message A. Alternatively, the terminal device sends a message B to the first session management function. To be specific, the terminal device sends the message B to the access and mobility management function, the access and mobility management function receives the message B, the access and mobility management function sends the message B to the first session management function, and the first session management function receives the message B.

It should be noted that, in this embodiment of this application, communication between the terminal device and the core network device (including the first session management function and the access and mobility management function) may be implemented via the core network device. For example, in S401, the terminal device sends the identification information of the MBS (service) to an access network device, the access network device sends the identification information of the MBS (service) to the first session management function, and the first session management function receives the identification information of the MBS (service) from the access network device.

It may be understood that, in this embodiment of this application, the EAP authentication and/or authorization method is used as an example for description. For another authentication and/or authorization method, other information may be further exchanged between devices.

In Embodiment 1.2, a first MBS authentication and authorization function sends key information of an MBS (service) to a terminal device, to obtain a key in a new 5G architecture. The first MBS authentication and authorization function may send the key information of the MBS (service) to the terminal device in or after the foregoing registration process.

The first MBS authentication and authorization function may send the key information of the MBS (service) to the terminal device in the following possible manners via a first session management function, a user plane function, or a first MBS user plane function.

### Manner 1:

The first MBS authentication and authorization function sends the key information of the MBS (service) to the terminal device via the first session management function. Specifically, the first MBS authentication and authorization function sends the key information of the MBS (service) to the first session management function. The first session management function receives the key information of the MBS (service). The first session management function sends the key information of the MBS (service) to the terminal device. The terminal device receives the key information of the MBS (service).

In an optional manner of Manner 1, the first MBS authentication and authorization function includes the key information of the MBS (service) in a fourth message, and sends the fourth message to the first session management function. The first session management function receives the fourth message. The first session management function sends the key information of the MBS (service) to the terminal device.

In another optional manner of Manner 1, before the first MBS authentication and authorization function sends the key information of the MBS (service) to the first session management function, the first MBS authentication and authorization function determines that authentication and authorization on the MBS (service) of the terminal device succeeds.

In another optional manner of Manner 1, before the first MBS authentication and authorization function sends the key information of the MBS (service) to the first session management function, the method further includes:

The terminal device sends a key request message to the first session management function, where the key request message carries a key identifier or an MBS service ID of the MBS (service). The first session management function receives the key request message. The first session management function sends the key request message to the first MBS authentication and authorization function. The first MBS authentication and authorization function receives the key request message. The first MBS authentication and authorization function determines, based on the MBS service ID or the key identifier of the MBS (service), to-be-sent key information of the MBS (service).

### Manner 2:

The first MBS authentication and authorization function sends the key information of the MBS (service) to the terminal device via the UPF. Specifically, the first MBS authentication and authorization function sends the key information of the MBS (service) to the UPF. The UPF receives the key information of the MBS (service). The UPF sends the key information of the MBS (service) to the terminal device. The terminal device receives the key information of the MBS (service).

In an optional manner of Manner 2, before the first MBS authentication and authorization function sends the key information of the MBS (service) to the terminal device via the UPF, the method further includes:

The terminal device sends a key request message to the UPF, where the key request message carries a key identifier or an MBS service ID of the MBS (service). The UPF receives the key request message. The UPF sends the key request message to the first MBS authentication and authorization function. The first MBS authentication and authorization function receives the key request message. The first MBS authentication and authorization function determines, based on the MBS service ID or the key identifier of the MBS (service), to-be-sent key information of the MBS (service).

### Manner 3:

The first MBS authentication and authorization function sends the key information of the MBS (service) to the terminal device via the first MBS user plane function. Specifically, the first MBS authentication and authorization function sends the key information of the MBS (service) to the first MBS user plane function. The first MBS user plane function receives the key information of the MBS (service). The first MBS user plane function sends the key information of the MBS (service) to the UPF, and the UPF receives the key information of the MBS (service). The UPF sends the key information of the MBS (service) to the terminal device, and the terminal device receives the key information of the MBS (service).

In an optional manner of Manner 3, before the first MBS authentication and authorization function sends the key information of the MBS (service) to the terminal device via the first MBS user plane function, the method further includes:

The terminal device sends a key request message to the UPF, where the key request message carries a key identifier or an MBS service ID of the MBS (service). The UPF receives the key request message. The UPF sends the key request message to the first MBS user plane function, and the first MBS user plane function receives the key request message. The first MBS user plane function sends the key request message to the first MBS authentication and authorization function. The first MBS authentication and authorization function receives the key request message. The first MB S authentication and authorization function determines, based on the MB S service ID or the key identifier of the MBS (service), to-be-sent key information of the MBS (service).

In this application, the first MBS user plane function may be an MSF-U or an MBSU.

It should be noted that, in this embodiment of this application, the key request message is also referred to as a fifth message.

Before the first MBS authentication and authorization function sends the key information of the MBS (service) to the terminal device, there is the following possible case: To be specific, that the first MBS authentication and authorization function sends the key information of the MBS (service) to the terminal device may be further triggered by one or more of the following conditions: The first MBS authentication and authorization function generates or updates a key of the MBS (service); the first MBS authentication and authorization function determines to start transmission of data of the MBS (service); the first MBS authentication and authorization function receives the key information that is of the MBS (service) and that is sent by the AF; or the first MBS authentication and authorization function receives a request that is sent by the AF and that is for starting transmission of the data of the MBS (service).

An occasion for obtaining the key by the terminal device is not limited in this embodiment of this application. For example, the key may be obtained when an authentication and authorization result of the MBS (service) is fed back, the key may be obtained after authentication and authorization of the MBS (service) succeeds, or the key may be obtained after the terminal device sends the fifth message.

Optionally, the terminal device decrypts a protected message or data of the MBS (service) by using the key of the MBS (service), to obtain a plaintext message and/or data of the MBS (service). Alternatively, the terminal device verifies, by using the key of the MBS (service), whether the message and/or data of the MBS (service) is tampered with. Possibly, after receiving the data of the MBS (service), the terminal device may decrypt a protected MTK by using an MSK, and decrypt the protected data of the MBS (service) by using the MTK.

If the terminal device receives a validity period of the key of the MBS (service), after the validity period of the key expires or is invalid, the terminal device may further delete the expired or invalid key of the MBS (service), or send the key request message carrying the MBS service ID or the key of the MBS (service) to the first MBS authentication and authorization function via the UPF, the first session management function, or the first MBS user plane function. For details, refer to the descriptions in Embodiment 1.2. A validity period of the MTK may be the same as or different from a validity period of the MSK.

In Embodiment 1.3, a first MBS authentication and authorization function may send a security policy of an MBS (service) to a first MBS user plane function, so that a network device obtains the security policy and determines how to execute the security policy in a new 5G architecture. As shown in FIG. 5, the following steps are included.

S501: The first MBS authentication and authorization function sends the security policy of the MBS (service) to the first MBS user plane function, and the first MBS user plane function receives the security policy of the MBS (service). The security policy of the MBS (service) indicates to perform security protection on data of the MBS (service), or indicates not to perform security protection on the data of the MBS (service).

The first MBS user plane function may determine, according to the security policy of the MBS (service), whether to perform security protection on the data of the MBS (service).

For example, the security policy may be "NOT Needed", indicating that security protection is not performed on the data of the MBS (service), that is, security protection is not performed on the data of the MBS (service). For another example, the security policy may be "Required", indicating to perform security protection on the data of the MBS (service). For another example, the security policy may be "Preferred", indicating that security protection is preferred for the data of the MBS (service). In this case, security protection may be performed on the data of the MBS (service).

Performing security protection on the data of the MBS (service) means performing encryption protection and/or integrity protection on the data of the MBS (service).

Optionally, before S501, the first MBS authentication and authorization function sends a sixth message to a UDM or a UDR, and the UDM or the UDR receives the sixth message. The sixth message includes an MBS service ID. The sixth message is used to obtain the security policy of the MBS (service). The UDM or the UDR sends the security policy of the MBS, and the first MBS authentication and authorization function receives the security policy of the MBS (service) from the UDM or UDR.

Alternatively, optionally, before S501, the first MBS authentication and authorization function sends, to an AF, a request message used to obtain the security policy of the MBS (service). The request message carries the MBS service ID. The AF sends the security policy of the MBS, and the first MBS authentication and authorization function receives the security policy of the MBS (service) from the AF.

S502: The first MBS user plane function performs security protection on the data of the MBS (service) by using a key of the MBS (service) or does not protect the data of the MBS (service), according to the security policy of the MBS (service).

In S502, the first MBS user plane function may use an MSK to perform security protection on an MTK, and use the MTK to perform security protection on the data of the MBS (service).

Optionally, before S502, the first MBS user plane function may further generate the key of the MBS (service).

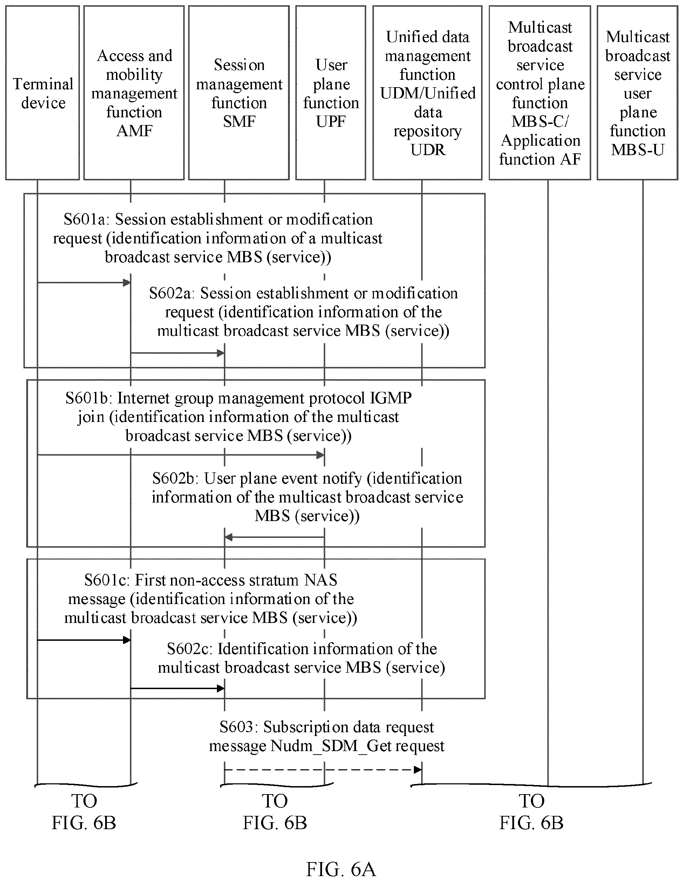

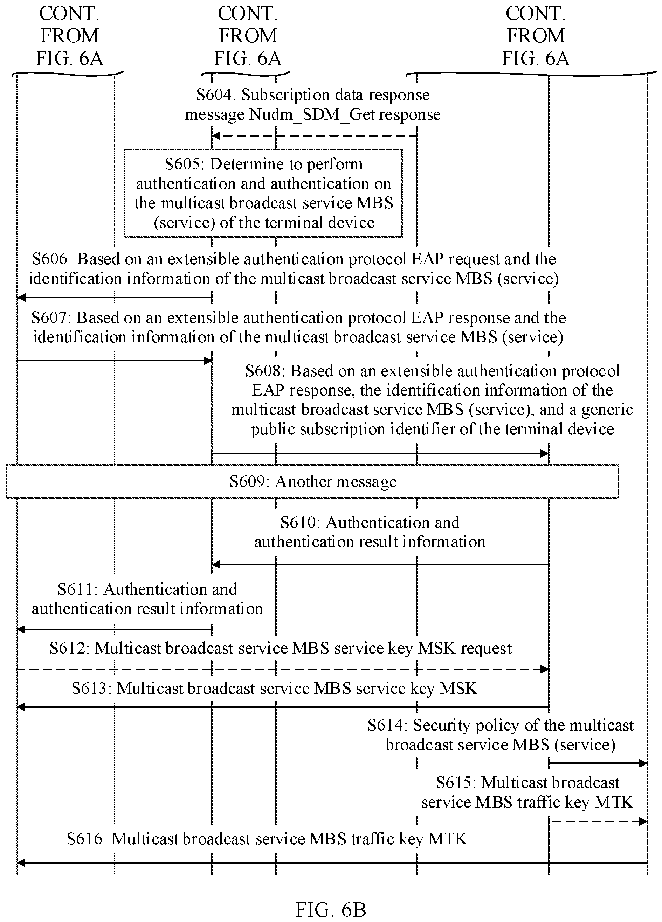

Embodiment 1.1, Embodiment 1.2, and Embodiment 1.3 may be used separately or in combination, to implement a registration procedure of the MBS (service) more completely. For example, a possible registration procedure is shown in FIG. 6A and FIG. 6B, and includes the following steps.

S601a: A terminal device initiates a session establishment or modification request. To be specific, the terminal device sends a PDU session establishment or modification request message to an AMF, to request to establish or modify a session. The PDU session establishment or modification request message includes an MBS service ID.

Optionally, the PDU session establishment or modification request message may further include one or more of the following: multicast indication information (multicast indication), S-NSSAI, a DNN, or an MBS user ID.

The AMF may communicate with an SMF via an I-SMF.

S602a: The AMF sends the received PDU session establishment or modification request message to the SMF. For example, the AMF sends an Nsmf_PDUSEssion_CreateSMContext request message to the SMF.

Optionally, after receiving the PDU session establishment or modification request message, the SMF sends a message to a second SMF, to request to establish or modify a session or to request an MBS (service). The message carries the received MBS service ID.

S601b: The terminal device sends an IGMP join message or an MLR message to a UPF on a user plane, to request to use an MBS (service) of the MBS service ID, to request to obtain data of an MBS (service) corresponding to the MBS Service ID, or to request to join a multicast group corresponding to the MBS service ID. The IGMP join message or the MLR message includes the MBS service ID.

Optionally, the IGMP join message or the MLR message may further include the multicast indication and/or the MBS user ID.

S602b: The UPF sends, to the SMF, a message used to notify an IGMP join or MLR event. For example, the UPF sends a user plane event notification (User plane event notify) message to the SMF.

Optionally, after receiving the message for notifying the IGMP join or MLR event, the SMF sends a message to the second SMF, to request to establish or modify a session, or to request an MBS (service). The message carries the received MBS service ID.

S601c: The terminal device sends a first NAS message to the AM. The first NAS message includes the MBS service ID. The first NAS message is used to request to join or create or modify an MBS session, to request registration of an MBS (service), or to request activation of an MBS session context.

Optionally, the first NAS message may further include the multicast indication and/or the MBS user ID.

S602c: The AMF sends, to the SMF, a message that carries the MBS service ID. The message is used to request to join or create or modify the MBS session, or to request registration of the MBS (service).

It may be understood that the terminal device may perform any one of the foregoing operations (S601a, S601b, and S601c). Optionally, when sending the received MBS service ID to the second SMF, the SMF may further send the MBS user ID or send the message carrying the MBS user ID.

Optionally, S603: The terminal device sends a subscription data request message (for example, a Nudm_SDM_Get request message) to a UDM or a UDR, to request subscription data of the MBS (service).

The Nudm_SDM_Get request message includes the MBS service ID and an optional requested information type.

Optionally, S604: The UDM returns a subscription data response message (for example, a Nudm_SDM_Get response message) to the terminal device, including the subscription data of the MBS (service).

S605: The SMF determines, based on the subscription data of the MBS (service), whether to perform authentication and authorization on the MBS (service) of the terminal device.

Optionally, S606: The SMF sends a first identifier request message such as an EAP request message to the terminal device, where the first identifier request message includes the MBS service ID, to request the MBS user ID.

Optionally, S607: The terminal device returns a first identifier response message such as an EAP response message to the SMF, where the first identifier response message includes the MBS service ID and the MBS user ID.

S608: The SMF sends the EAP response message including the MBS service ID and a GPSI to the MBS-C/AF.

S609: The terminal device may further exchange another message with an MBS-C depending on an MBS authentication and authorization method used between the terminal device and a network device. The another message exchanged between the terminal device and the MBS-C is not limited in this embodiment of this application.

S610: The MBS-C/AF sends an EAP success/failure message including the MBS service ID to the SMF, to indicate whether an authentication and authorization result is success or failure.

Optionally, the EAP success/failure message further includes a validity period of the authentication and authorization result.

S611: The SMF sends the EAP success/failure message to the terminal device.

S612: The terminal device sends, to the MBS-C/AF, a request message for obtaining an MSK. The request message includes an identifier (MSK ID) of the MSK.

Optionally, the terminal device may obtain the MSK in the following several possible manners:
Manner 1: When sending the EAP success/failure message in S610, the MBS-C/AF sends the MSK and a validity period of the MSK to the terminal device.
Manner 2: The MBS-C/AF sends the MSK and the validity period of the MSK to the terminal device at any moment after S610.
Manner 3: After receiving the request message for obtaining an MSK, the MBS-C/AF sends the MSK and the validity period of the MSK to the terminal device.
Manner 4: The MB S-C/AF sends the MSK and the validity period of the MSK to the UPF at any moment after S610. The UPF sends the MSK and the validity period of the MSK to the terminal device.
Manner 5: After receiving the request message for obtaining an MSK, the MBS-C/AF sends the MSK and the validity period of the MSK to the UPF. The UPF sends the MSK and the validity period of the MSK to the terminal.
Manner 6: The MBS-C/AF sends the MSK and the validity period of the MSK to the MBS-U at any moment after S610. The MBS-U sends the MSK and the validity period of the MSK to the UPF, and the UPF sends the MSK and the validity period of the MSK to the terminal device.
Manner 7: After receiving the request message for obtaining an MSK, the MBS-C/AF sends the MSK and the validity period of the MSK to the MBS-U. The MBS-U sends the MSK and the validity period of the MSK to the UPF, and the UPF sends the MSK and the validity period of the MSK to the terminal device.

S613: The MBS-C/AF sends the MSK ID, the MSK, and the validity period of the MSK to the terminal device.

S614: The MBS-C/AF sends the security policy of the MBS (service) to the MBS-U.

Optionally, S615: The MBS-C/AF sends an MTK identifier (MTK ID) and an MTK to the MBS-U.

S616: The MBS-U sends the MTK ID, the MTK, and a validity period of the MTK to the terminal device.

Optionally, the terminal device may obtain the MTK in the following several possible manners:
Manner 1: The MBS-U/AF sends the MTK and the validity period of the MTK to the UPF, and the UPF sends the MTK and the validity period of the MTK to the terminal device.
Manner 2: The terminal device sends a request message for obtaining the MTK to the UPF, and the UPF sends the received request message for obtaining the MTK to the MBS-U/AF. After receiving the request message for obtaining the MTK, the MB S-U/AF sends the MTK and the validity period of the MTK to the UPF, and the UPF sends the MTK and the validity period of the MTK to the terminal.
Manner 3: The MBS-U sends the request message for obtaining the MTK to the MBS-C/AF. The MBS-C/AF sends the MTK and the validity period of the MTK to the MBS-U, and the MBS-U sends the MTK and the validity period of the MTK to the terminal device.
Manner 4: The terminal device sends the request message for obtaining the MTK to the UPF, the UPF sends the received request message for obtaining the MTK to the MBS-U, the MBS-U sends the request message for obtaining the MTK to the UPF, and the UPF sends the received request message for obtaining the MTK to the MBS-U. The MB S-C/AF sends the MTK and the validity period of the MTK to the MBS-U, and the MBS-U sends the MTK and the validity period of the MTK to the terminal device.
Manner 5: The MBS-C/AF sends the MTK and the validity period of the MTK to the MSF-U, and the MBS-U sends the MTK and the validity period of the MTK to the terminal device.

It should be noted that the method in Embodiment 1 is described by using the 5G architecture as an example. However, the method is not limited to being applied to the 5G architecture, and is also applicable to a future network architecture (for example, 6G).

### Embodiment 2

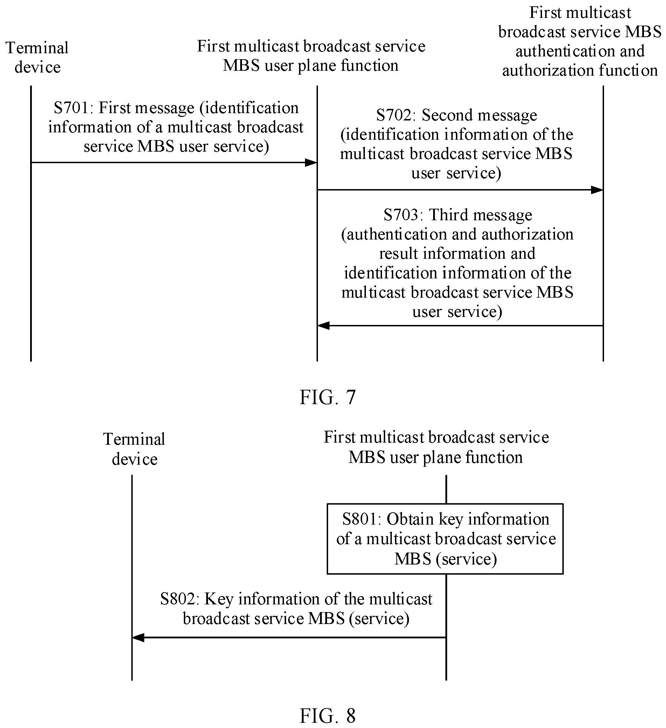

Embodiment 2.1: A first MBS user plane function requests authentication and authorization of an MBS (service) of a terminal device, and a first MBS authentication and authorization function may return an authentication and authorization result of the MBS (service) to the first MBS user plane function, so that authentication and authorization of the MBS (service) is implemented in a new 5G architecture. As shown in FIG. 7, the following steps are included.

S701: The terminal device sends a first message to the first MBS user plane function, and the first MB S user plane function receives the first message. The first message includes identification information of the MBS (service) and a first identifier of the terminal device.

The first MBS user plane function may be an MSF-U or an MB SU. In this embodiment of this application, the first MBS user plane function supports authentication and authorization of the MBS (service) of the terminal device.

The first message is used to request registration of the MBS (service), or request to join or use the MBS (service).

When the terminal device expects to use one MBS (service) and the MBS (service) is protected, the terminal device may send the first message to the first MBS user plane function. After receiving the first message, the first MBS user plane function may determine that the terminal device expects to use one MBS (service), to participate in a registration procedure of the MBS (service), to register the MBS (service). The first message includes an MBS service ID. Optionally, the first message may further include the first identifier (MBS User ID) of the terminal device.

Possibly, the terminal device may send the first message to the first MBS user plane function via a UPF. To be specific, the terminal device sends the first message to the UPF, the UPF sends the first message to the first MBS user plane function after receiving the first message, and the first MBS user plane function receives the first message from the UPF.

S702: The first MBS user plane function sends a second message to the first MBS authentication and authorization function, and the first MBS authentication and authorization function receives the second message. The second message includes the identification information of the MBS (service).

If the first message includes the first identifier of the terminal device, the first MBS user plane function includes the first identifier of the terminal device in the second message.

The second message is used to request registration of the MBS (service), or request to join or use the MBS (service).

The first MBS authentication and authorization function may be an MBS-C, a NEF, an MSF-C, an AF, an MBSF, a UDM, a UDR, a PCF, a first session management function, or an AAA server.

S703: The first MBS authentication and authorization function sends a third message to the first MBS user plane function, and the first MBS user plane function receives the third message from the first MBS authentication and authorization function. The third message includes authentication and authorization result information and the identification information of the MBS (service).

The first user plane function may further release a session of the MBS (service) of the terminal device based on a validity period of an authentication and authorization result.

Optionally, the third message may further include key information of the MBS (service).

Optionally, the third message may further include the first identifier of the terminal device and/or identification information of the terminal device.

The first MBS user plane function may further send the authentication and authorization result information to the terminal device. In a possible manner, the first MBS user plane function may send the authentication and authorization result information to the terminal device via the UPF. To be specific, the first MBS user plane function may send the authentication and authorization result information of the MBS (service) to the UPF, and the UPF sends the authentication and authorization result information to the terminal device after receiving the authentication and authorization result information of the MBS (service).

Optionally, if the first MBS user plane function receives key information of the MBS (service), the first MBS user plane function sends the key information of the MBS (service) to the terminal device. In a possible manner, the first MBS user plane function may send the key information of the MBS (service) to the terminal device via the UPF. To be specific, the first MBS user plane function may send the key information of the MBS (service) to the UPF, and the UPF sends the key information of the MBS (service) to the terminal device after receiving the key information of the MBS (service). After the terminal device receives the key information of the MBS (service), for usage of the key of the MBS (service), refer to the descriptions in Embodiment 1. Details are not described herein again.

Optionally, the first MBS authentication and authorization function or the first MBS user plane function may further send the authentication and authorization result information, the identification information of the MBS (service), and the identification information of the terminal device to the UDM/UDR. Alternatively, the first MBS authentication and authorization function may further send the authentication and authorization result information, the identification information of the MBS (service), the identification information of the terminal device, and the first identifier of the terminal device to the UDM/LTDR.

The first MBS authentication and authorization function may obtain the identification information of the terminal device in step S701. The UPF obtains the identification information of the terminal device based on the received first message, and sends the identification information of the terminal device to the first user plane function. When the first MBS user plane function sends the second message to the first MBS authentication and authorization function, the identification information of the terminal device is included.

It may be understood that specific messages of the second message and the third message may depend on the MBS authentication and authorization method. This is not limited in this embodiment of this application. In addition, in different authentication and/or authorization methods, other information may be further exchanged between devices. This is not limited in this embodiment of this application.

In Embodiment 2.2, a first MBS user plane function sends key information of an MBS (service) to a terminal device, to obtain a key in a new 5G architecture. The first MBS user plane function may send the key information of the MBS (service) to the terminal device in or after the foregoing registration process. As shown in FIG. 8, the following steps are included.

S801: The first MBS user plane function obtains the key information of the MBS (service).

Optionally, before S801, the first MBS user plane function determines that there is to-be-sent data of the MBS (service), and security protection needs to be performed on the data of the MBS (service).

In an implementation, in S801, the first MBS user plane function receives the key information of the MBS (service) from the first MBS authentication and authorization function. Optionally, before S801, the first MBS user plane function sends a fourth message to the first MBS authentication and authorization function. The fourth message carries the MBS service ID or a key identifier of the MBS user service, and the fourth message is used to request the key information of the MBS (service).

In another implementation, in S801, the first MBS user plane function generates the key information of the MBS (service).

Before S801, the terminal device sends a fifth message, and the first MBS user plane function receives the fifth message from the terminal device. The fifth message carries the identification information of the MBS (service) or carries the key identifier of the MBS (service). The fifth message is used to request the key of the MBS (service).

Possibly, the terminal device may send the fifth message to the first MBS user plane function via the UPF. To be specific, the terminal device sends the fifth message to the UPF, the UPF sends the fifth message to the first MBS user plane function after receiving the fifth message, and the first MBS user plane function receives the fifth message from the UPF.

S802: The first MBS user plane function sends the key information of the MBS (service) to the terminal device.

Possibly, the first MBS user plane function may send the key information of the MBS (service) to the terminal device via the UPF. To be specific, the first MBS user plane function sends the key information of the MBS (service) to the UPF, and the UPF sends the key information of the MBS (service) to the terminal device after receiving the key information of the MBS (service).

After the terminal device receives the key information of the MBS (service), for usage of the key of the MBS (service), refer to the descriptions in Embodiment 1. Details are not described herein again.

In Embodiment 2.3, a first MBS authentication and authorization function may send a security policy of an MBS (service) to a first MBS user plane function, so that a network device obtains the security policy and determines how to execute the security policy in a new 5G architecture. For a process in which the network device obtains the security policy and determines how to execute the security policy in Embodiment 2.3, refer to Embodiment 1.3. Repeated parts are not described again.

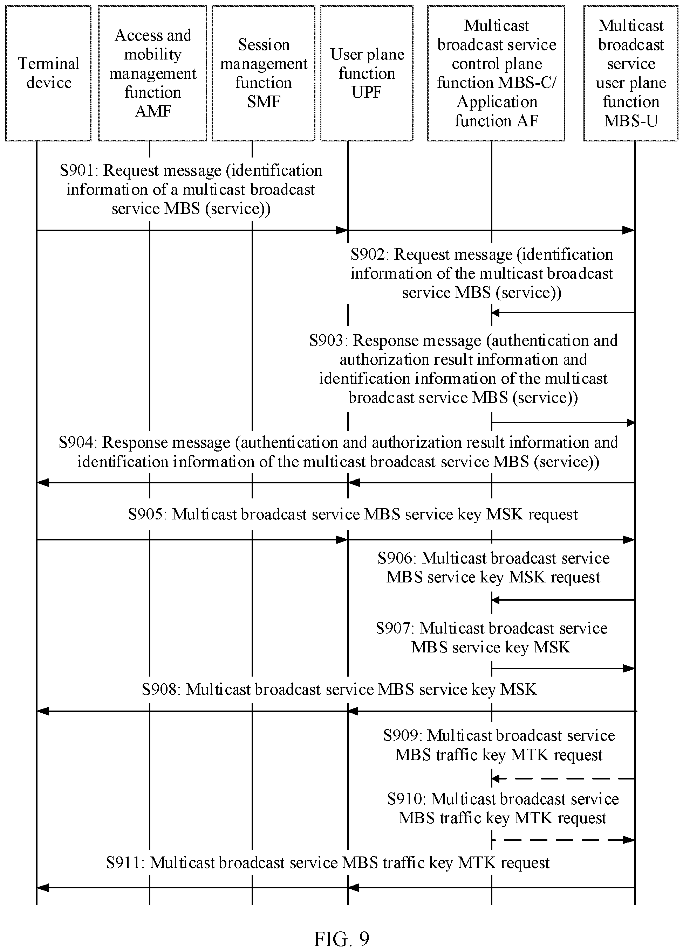

Embodiment 2.1, Embodiment 2.2, and Embodiment 2.3 may be used separately or in combination, to implement a registration procedure of the MBS (service) more completely. For example, a possible registration procedure is shown in FIG. 9, and includes the following steps.

S901: A terminal device sends a request message to an MBS-U via a UPF. The request message is used to register an MBS (service) or is used to request to join or use an MBS (service). The request message includes an MBS service ID.

Optionally, the request message may further include an MBS user ID.

S902: The MBS-U sends the request message to an MBS-C/AF. The request message includes the MBS service ID and an optional MBS user ID.

S903: The MBS-C/AF sends a response message to the MBS-U in response to the request message. The response message includes the MBS service ID.

The response message includes an authentication and authorization result of the MBS (service), and optionally a validity period of the authentication and authorization result.

Optionally, the response message may further include key information of the MBS (service), for example, including an MTK and/or an MSK.

For different authentication and/or authorization methods, another MBS (service) registration message may be exchanged between devices. This is not limited in this embodiment of this application.

Optionally, the MBS-C/AF may further send the authentication and authorization result of the MBS (service) to a UDM/UDR.

S904: The MBS-U sends the response message to the terminal device via the UPF.

S905: The terminal device sends an MSK request message to the MBS-U via the UPF. The MSK request message includes an MSK ID.

S906: The MBS-U sends the MSK request message to the MBS-C/AF.

S907: In response to the MSK request message, the MBS-C/AF sends the MSK and the MSK ID to the MBS-U based on the MSK ID carried in the MSK request message.

Optionally, the MBS-C/AF may further send a validity period of the MSK.

S908: The MBS-U sends the MSK, the MSK ID, and optionally the validity period of the MSK to the terminal device via the UPF.

Optionally, S909: The MBS-U sends an MTK request message to the MBS-C/AF. The MTK request message includes an MTK ID or the MBS service ID.

Optionally, a trigger condition for the MBS-U to send the MTK request message may be: The MBS-U determines that there is to-be-sent data of the MBS (service), and security protection needs to be performed on the data of the MBS (service).

Optionally, S910: The MBS-C/AF sends the MTK and the MTK ID to the MBS-U.

Optionally, the MBS-C/AF sends a protected MTK or a protected message carrying the MTK. For example, the MTK may be protected based on the MSK.

When subsequently sending the data of the MBS (service), the MBS-U uses the MTK to protect the data of the MBS (service).

S911: The MBS-U sends the MTK and the MTK ID to the terminal device via the UPF.

Optionally, the MBS-U sends a protected MTK or a protected message that carries the MTK. For example, the MTK may be protected based on the MSK.

Optionally, the MBS-U may obtain the protected MTK or the protected message carrying the MTK in the following possible manners:

Manner 1: The MBS-U obtains the MSK from the MBS-C/AF, and the MBS-U protects the MTK or the message carrying the MTK based on the MBS-U.

The MBS-U may request the MSK from the MBS-C/AF, and the MBS-C/AF sends the MSK to the MBS-U in response to the request. Alternatively, the MBS-C/AF actively sends the MSK to the MBS-U.

Manner 2: The MBS-U sends the MTK or the message carrying the MTK to the MBS-C/AF, and the MBS-U may further send the MTK ID and/or the MSK ID and/or the MBS service ID. The MBS-C/AF determines a corresponding MSK based on the MTK ID and/or the MSK ID and/or the MBS service ID, and uses the MSK to protect the MTK or the message carrying the MTK. The MBS-C/AF sends the protected MTK or the protected message carrying the MTK to the MBS-U.

Optionally, after the terminal device receives the protected MTK or the protected message carrying the MTK, the terminal device first decrypts or verifies the protected MTK or the protected message carrying the MTK, and obtains the MTK. For example, the terminal device may decrypt or verify the protected MTK or the protected message carrying the MTK by using the MSK.

After receiving the MTK or the message carrying the MTK, the terminal device may store the MTK. In this way, when receiving a protected message and/or data of the MBS (service) subsequently, the terminal device may decrypt the protected message and/or data of the MBS (service) by using the MTK, or verify the protected message and/or data of the MBS (service), to obtain a plaintext message and/or data of the MBS (service).

It should be noted that the method in Embodiment 3 is described by using the 5G architecture as an example. However, the method is not limited to being applied to the 5G architecture, and is also applicable to a future network architecture (for example, 6G).

### Embodiment 3

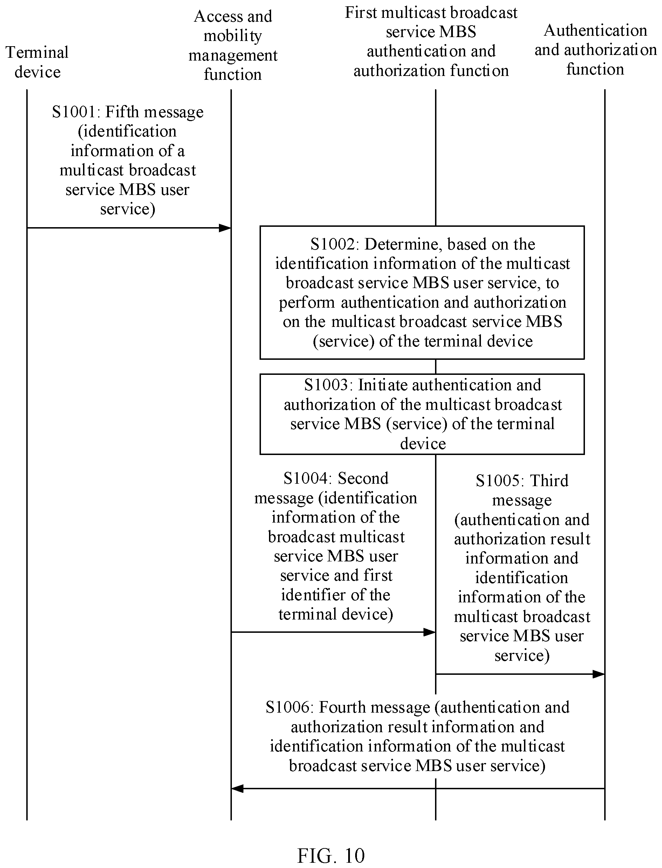

In Embodiment 3.1, an access and mobility management function determines whether to perform authentication and authorization on usage of an MBS (service) by the terminal device, and if determining to perform authentication and authorization on usage of the MBS (service) by the terminal device, the access and mobility management function interacts with an authentication and authorization function to implement authentication and authorization on the MBS (service) in a new 5G architecture. As shown in FIG. 10, the following steps are included.

S1001: The terminal device sends a fifth message to the access and mobility management function, and the access and mobility management function receives the fifth message. The fifth message carries identification information (MBS Service ID) of the MBS (service).

Optionally, the fifth message may further include one or more of the following: a first identifier of the terminal device, S-NSSAI, and a DNN.

The fifth message is used to request to join or create or modify an MBS session, to request registration of the MBS (service), or to request activation of an MBS session context. The fifth message may be a first NAS message.

S1002: The access and mobility management function determines, based on the identification information of the MBS (service), to perform authentication and authorization on usage of the MBS (service) by the terminal device.

In S1002, the access and mobility management function determines, based on subscription data of the MBS (service) corresponding to the identification information of the MBS (service), to perform authentication and authorization on usage or joining of the MBS (service) by the terminal device. For example, the access and mobility management function determines, based on an MBS authentication and authorization indication in the subscription data of the MBS (service), to perform authentication and authorization on usage or joining of the MBS (service) by the terminal device.

In an implementation, the access and mobility management function locally stores the subscription data of the MBS (service). The access and mobility management function may locally obtain, based on the MBS service ID, the subscription data of the MBS (service) corresponding to the MBS service ID.

In another implementation, the access and mobility management function obtains the subscription data of the MBS (service) from a UDM/UDR.

For example, the access and mobility management function may send, to the UDMIUDR, a message requesting the subscription data of the MBS (service), for example, a Nudm_SDM_Get request message. The message includes the MBS service ID, and optionally includes a requested message type. The requested message type may indicate that the requested subscription data is MBS-related subscription data.

Optionally, when the subscription data is not stored locally, the access and mobility management function may obtain the subscription data of the MBS (service) from the UDM/LTDR.

For a process in which the UDM/UDR returns the subscription data of the MBS (service), refer to S402 in Embodiment 1.1. Repeated parts are not described again.

S1003: The access and mobility management function initiates the authentication and authorization on the MBS (service) of the terminal device.

The access and mobility management function sends a first message to an authentication and authorization function, and the authentication and authorization function receives the first message from the access and mobility management function. The first message includes the identification information of the MBS (service) and optionally the first identifier (MBS User ID) of the terminal device.

The authentication and authorization function may be a new network function, or a function or service provided by the authentication and authorization function may be assumed by an existing network function such as an authentication server function (Authentication Server Function, AUSF) or a network slice specific authentication and authorization function NSSAAF (Network Slice Specific Authentication and Authorization Function, NSSAAF). The network function assuming the authentication and authorization function is not limited in this embodiment of this application. Possibly, the authentication and authorization function is any network function that supports an EAP authentication mode.

Optionally, the first message may further include a second identifier of the terminal device, and the second identifier of the terminal device may indicate identification information of the terminal device. The first message is used to request to invoke an authentication and authorization service of the MBS (service) provided by the authentication and authorization function.

Optionally, before the access and mobility management function sends the first message to the authentication and authorization function, the access and mobility management function may further send a message to the terminal device, to notify or request the terminal device to perform authentication and authorization on the MB S (service), or to request to obtain the first identifier of the terminal device. For example, if an EAP authentication and/or authorization method is used, the message may be an EAP request/identity message for requesting an EAP ID (that is, requesting the MBS user ID).

After receiving the MBS service ID, the terminal device may determine, based on the MBS service ID, an EAP ID used by the terminal device or the first identifier of the terminal device, and respond to the message. The terminal device returns the first identifier (MBS User ID) of the terminal device to the access and mobility management function. For example, the message returned by the terminal device may be an EAP response/identity message, and is used to send the EAP ID. That is, the EAP response/identity message is a message carrying the MBS user ID.

S1004: The authentication and authorization function sends a second message to a first MBS authentication and authorization function, and the first MBS authentication and authorization function receives the second message. The second message includes the identification information of the MBS (service) and the first identifier of the terminal device.

In an implementation, the authentication and authorization function may send the second message directly to the first MBS authentication and authorization function.

In another implementation, the authentication and authorization function may send the second message to the first MBS authentication and authorization function via a proxy or a NEF. To be specific, the authentication and authorization function sends the second message to the proxy or the NEF, and the proxy or the NEF sends the second message to the first MBS authentication and authorization function after receiving the second message. For example, the first MBS authentication and authorization function includes an AF. When the AF belongs to a third party, the authentication and authorization function sends the second message to the first MBS authentication and authorization function via the proxy or the NEF.

S1005: The first MBS authentication and authorization function sends a third message to the authentication and authorization function, and the authentication and authorization function receives the third message. The third message includes authentication and authorization result information and the identification information of the MBS (service).

In an implementation, the first MBS authentication and authorization function may send the third message directly to the authentication and authorization function.

In another implementation, the first MBS authentication and authorization function may send the third message to the authentication and authorization function via the proxy or the NEF. To be specific, the first MBS authentication and authorization function sends the third message to the proxy or the NEF, and the proxy or the NEF sends the third message to the authentication and authorization function after receiving the third message. For example, the first MBS authentication and authorization function includes the AF. When the AF belongs to the third party, the first MBS authentication and authorization function sends the third message to the authentication and authorization function via the proxy or the NEF.

Optionally, the third message further includes the first identifier of the terminal device and/or the identification information of the terminal device.

Optionally, the third message may further include key information of the MBS (service).

Optionally, the authentication and authorization function may further send the identification information of the MBS (service), authentication and authorization result information, and the identification information of the terminal device to the UDMIUDR. Alternatively, optionally, the authentication and authorization function may further send the identification information of the MBS (service), the authentication and authorization result information, the second identifier of the terminal device, and the first identifier of the terminal device to the UDM/LTDR.

S1006: The authentication and authorization function sends a fourth message to the access and mobility management function, and the access and mobility management function receives the fourth message. The fourth message includes the authentication and authorization result information of the MBS (service) and the identification information of the MBS (service).

Optionally, the fourth message may further include the first identifier of the terminal device and/or the identification information of the terminal device. The fourth message may further include the key information of the MBS (service).

The access and mobility management function sends the authentication and authorization result information of the MBS (service) and the identification information of the MBS (service) to the terminal device.

Optionally, the access and mobility management function sends the received key information of the MBS (service) to the terminal device. The terminal device receives the key information of the MBS (service). For usage of the key information of the MBS (service) by the terminal device, refer to the descriptions in Embodiment 1. Details are not described herein again.

Optionally, the access and mobility management function may further send the identification information of the MBS (service), the authentication and authorization result information of the MBS (service), and the identification information of the terminal device to the UDM/UDR. Alternatively, optionally, the access and mobility management function may further send the identification information of the MBS (service), the authentication and authorization result information of the MBS (service), the second identifier of the terminal device, and the first identifier of the terminal device to the UDM/UDR.

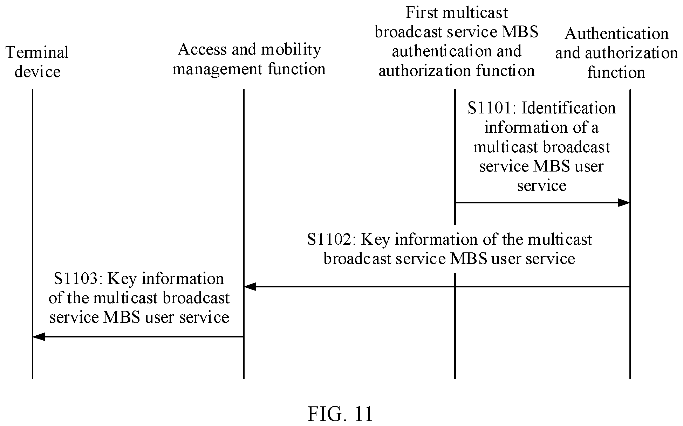

In Embodiment 3.2, an access and mobility management function sends a key of an MBS (service) to a terminal device, to obtain the key in a new 5G architecture. The access and mobility management function may send the key of the MBS (service) to the terminal device in or after the foregoing registration process. As shown in FIG. 11, the following steps are included.

S1101: A first MBS authentication and authorization function sends key information of the MBS (service) to an authentication and authorization function, and the authentication and authorization function receives the key information of the MBS (service).

Optionally, before S1101, the terminal device sends a tenth message to the access and mobility management function, and the access and mobility management function receives the tenth message. The tenth message includes identification information of the MBS (service) and a key identifier of the MBS (service). The tenth message requests to obtain the key of the MBS (service). The access and mobility management function sends an eleventh message to the authentication and authorization function, and the authentication and authorization function receives the eleventh message. The eleventh message includes the identification information of the MBS (service) and the key identifier of the MBS (service). The eleventh message requests to obtain the key of the MBS (service). The authentication and authorization function sends, to the first MBS authentication and authorization function, a message carrying the identification information of the MBS (service) or the key identifier of the MBS (service), to request to obtain the key information of the MBS (service).

S1102: The authentication and authorization function sends the key information of the MBS (service) to the access and mobility management function, and the access and mobility management function receives the key information of the MBS (service).

S1103: The access and mobility management function sends the key information of the MBS (service) to the terminal device, and the terminal device receives the key information of the MBS (service).

For usage of the key of the MBS (service) by the terminal device, refer to the descriptions in Embodiment 1. Details are not described herein again.

For a process in which a network device obtains a security policy and determines how to execute the security policy in Embodiment 3.3, refer to Embodiment 1.3. Repeated parts are not described again.

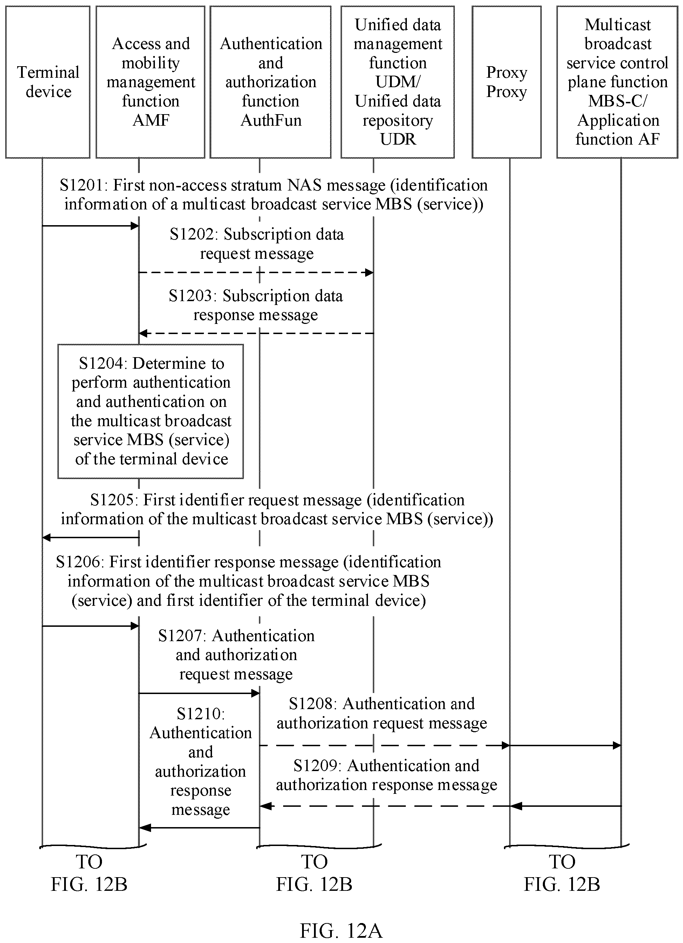

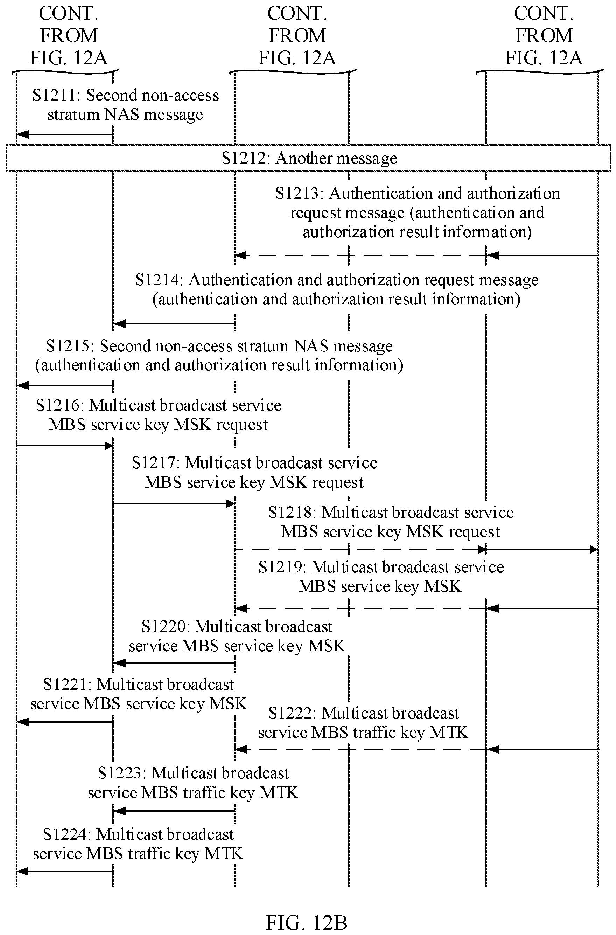

Embodiment 3.1, Embodiment 3.2, and Embodiment 3.3 may be used separately or in combination, to implement a registration process of the MBS (service) more completely. For example, a possible registration procedure is shown in FIG. 12A and FIG. 12B, and includes the following steps.

S1201. A terminal device sends a first NAS message to an AMF. The first NAS message requests to join or create or modify an MBS session, or requests registration of an MBS (service), or is used to activate an MBS session context. The first NAS message includes an MBS service ID.

Optionally, the first NAS message may further include an MBS user ID.

Optionally, S1202: The AMF sends a subscription data request message of the MBS (service) to a UDMIUDR.

The subscription data request message includes the MBS service ID and an optional requested information type.

Optionally, S1203: The UDM/UDR returns a subscription data response message of the MBS (service) to the AMF. The response message includes subscription data of the MBS (service) corresponding to the MBS service ID.

S1204: The AMF determines, based on the subscription data of the MBS (service), whether to perform authentication and authorization on the MBS (service) of the terminal device.

S1205: The AMF sends a first identifier request message such as an EAP request message to the terminal device, where the first identifier request message includes the MBS service ID, to request the MBS user ID.

S1206: The terminal device returns, to the AMF, a first identifier response message such as an EAP response message including the MBS service ID and the first identifier MBS user ID of the terminal device.

S1207: The AMF sends an authentication and authorization request message for the MBS (service) to an authentication and authorization function AuthFun. The message includes the MBS service ID, the EAP response message, and a GPSI.

S1208: Optionally, the AuthFun sends the authentication and authorization request message to an MBS-C/AF via a proxy. The message includes the MBS service ID, the EAP response message, and the GPSI.

S1209: Optionally, the MBS-C/AF sends an authentication and authorization response message to the AuthFun via the proxy. The message includes the MBS service ID, the EAP response message, and the GPSI. The EAP response message may include the MBS user ID.

S1210: The AuthFun sends the authentication and authorization response message of the MBS (service) to the AMF. The message includes the MBS service ID and an EAP message.

S1211: The AMF sends a second NAS message to the terminal device. The second NAS message includes the MBS service ID and the EAP message.

S1212: The terminal device may further exchange another message with the network device depending on an MBS authentication and authorization method used between the terminal device and the network device. The another message exchanged between the terminal device and the network device is not limited in this embodiment of this application.

S1213: Optionally, the MBS-C/AF sends the authentication and authorization response message to the AuthFun via the proxy. The message includes authentication and authorization result information (for example, EAP Success/Failure) and the MBS service ID, and indicates that an authentication and authorization result is success (EAP Success) or failure (EAP Failure).

Optionally, the authentication and authorization result information may further include a validity period of the authentication and authorization result.

S1214: The AuthFun sends the authentication and authorization response message of the MBS (service) to the AMF. The message includes the authentication and authorization result information and the MBS service ID.

Optionally, the authentication and authorization result information may further include the validity period of the authentication and authorization result.

S1215: The AMF sends a third NAS message to the terminal device. The third NAS message includes the authentication and authorization result information and the MBS service ID.

Optionally, the authentication and authorization result information may further include the validity period of the authentication and authorization result.

S1216: The terminal device sends an MSK request message including an MSK ID to the AMF.

S1217: The AMF sends the MSK request message including the MSK ID to the AuthFun.

S1218: Optionally, the AuthFun sends the MSK request message including the MSK ID to the MBS-C/AF via the proxy.

S1219: Optionally, the MBS-C/AF sends the MSK and the MSK ID to the AuthFun via the proxy.

S1220: The AuthFun sends the MSK and the MSK ID to the AMF.

S1221: The AMF sends the MSK and the MSK ID to the terminal device.

The information in S1216 to S1221 may be protected by using a key or a security credential.

S1222: Optionally, the MBS-C/AF sends an MTK and an MTK ID to the AuthFun via the proxy.

S1223: The AuthFun sends the MTK and the MTK ID to the AMF.

S1224: The AMF sends the MTK and the MTK ID to the terminal device.

The information in S1222 to S1224 may be protected by using the MSK.

It should be noted that the method in Embodiment 3 is described by using the 5G architecture as an example. However, the method is not limited to being applied to the 5G architecture, and is also applicable to a future network architecture (for example, 6G).

### Embodiment 4

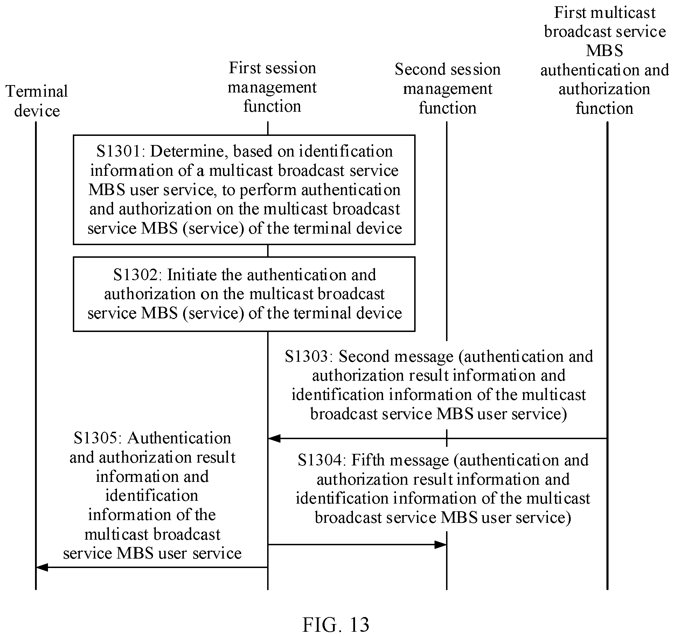

In Embodiment 4.1, a first session management function determines whether to perform authentication and authorization on an MBS (service) of a terminal device, and if determining to perform authentication and authorization on the MBS (service) of the terminal device, the first session management function initiates the authentication and authorization on the MBS (service), to implement authentication and authorization on the MBS (service) in a new 5G architecture. As shown in FIG. 13, the following steps are included.

S1301: The first session management function receives identification information of the MBS (service), and determines, based on the identification information of the MBS (service), to perform authentication and authorization on the MBS (service) of the terminal device.

In S1301, that the first session management function determines, based on the identification information of the MBS (service), to perform authentication and authorization on the MBS (service) of the terminal device may be that the first session management function determines, based on subscription data of the MBS (service) corresponding to the identification information of the MBS (service), to perform authentication and authorization on the MBS (service) of the terminal device.

That the first session management function obtains the subscription data of the MBS (service) before the first session management function determines, based on the subscription data of the MBS (service), to perform authentication and authorization on the MBS (service) of the terminal device includes: The first session management function obtains locally stored subscription data of the MBS (service) based on the identification information of the MBS (service); the first session management function obtains the subscription data of the MBS (service) from a UDMIUDR; or the first session management function receives the subscription data of the MBS (service) from a second session management function.

For the subscription data of the MBS (service) obtained by the first session management function from the UDMIUDR, refer to the descriptions of step S402 in Embodiment 1. Details are not described herein again.

Before S1301, the terminal device sends, to the second session management function, a message carrying the identification information of the MBS (service). The second session management function receives the message carrying the identification information of the MBS (service). For details, refer to the descriptions of step S401 in Embodiment 1. A difference lies in that the first session management function in step S401 is replaced with the second session management function.

The second session management function sends the identification information of the MBS (service) to the first session management function. Specifically, the second session management function sends a first message to the first session management function, where the first message includes the identification information of the MBS (service). The first session management function receives the first message from the second session management function. The first message requests to join or create or modify an MBS session. Optionally, the first message includes a first identifier of the terminal device. If the message that is received by the second session management function and that carries the identification information of the MBS (service) includes the first identifier of the terminal device, the second session management function includes the first identifier of the terminal device in the first message.

S1302: The first session management function initiates the authentication and authorization on the MBS (service) of the terminal device.

The first session management function sends the first identifier of the terminal device and the identification information of the MBS (service) to a first MBS authentication and authorization function, and the first MBS authentication and authorization function receives the first identifier of the terminal device and the identification information of the MBS (service).

If the first session management function does not obtain the first identifier before sending the first identifier of the terminal device to the first MBS authentication and authorization function, or the first message does not include the first identifier, the first session management function sends, to the second session management function, a message for requesting the first identifier, where the message includes the identification information of the MBS (service). The second session management function receives the message. The second session management function obtains the first identifier from the terminal device.

In a possible manner, the second session management function sends a third message to the terminal device, and the terminal device receives the third message, where the third message includes an MBS service ID, and the third message indicates or requests the terminal device to perform authentication and authorization on the MBS (service), or requests to obtain the first identifier of the terminal device. For example, if an EAP authentication and/or authorization method is used, the first message may be an EAP request/identity message for requesting an EAP ID (that is, requesting an MBS user ID).

After receiving the MBS service ID, the terminal device may determine, based on the MBS service ID, the EAP ID used by the terminal device, and respond to the third message. The terminal device sends a fourth message to the second session management function, and the second session management function receives the fourth message from the terminal device, where the fourth message includes the MBS service ID and the first identifier (MBS User ID) of the terminal device. For example, the fourth message may be an EAP response/identity message used to send the EAP ID, that is, the EAP response/identity message is a message carrying the MBS user ID.

The second session management function sends the MBS service ID and the first identifier of the terminal device to the first session management function.

S1303: The first MBS authentication and authorization function sends a second message to the first session management function, where the second message includes authentication and authorization result information and the identification information of the MBS (service).

The first session management function receives the second message from the first MBS authentication and authorization function.

Optionally, the second message includes key information of the MBS (service).

Optionally, the second message includes the first identifier and/or a second identifier of the terminal device.

S1304: The first session management function and the second session management function send a fifth message, where the fifth message includes the authentication and authorization result information and the identification information of the MBS (service).

Optionally, the fifth message includes the key information of the MBS (service).

Optionally, the fifth message includes the first identifier and/or the second identifier of the terminal device.

Optionally, the first session management function sends the authentication and authorization result information, the identification information of the MBS (service), and the second identifier of the terminal device to the UDMIUDR; or the first session management function sends the authentication and authorization result information, the identification information of the MBS (service), the second identifier of the terminal device, and the first identifier of the terminal device to the UDMIUDR.

Optionally, the first session management function may further release a session of the MBS (service) of the terminal device based on a validity period of an authentication and authorization result. For example, the first session management function releases the session of the MBS (service) of the terminal device after the authentication and authorization result expires or is invalid.

S1305: The second session management function sends the authentication and authorization result information and the identification information (MBS Service ID) of the MBS (service) to the terminal device, and the terminal device receives the authentication and authorization result and the MBS service ID.

Optionally, the second session management function may further send the authentication and authorization result information, the MBS service ID, and the identification information of the terminal device to the UDM/UDR, or the second session management function may further send the authentication and authorization result information, the MBS service ID, the second identifier of the terminal device, and the first identifier of the terminal device to the UDM/UDR.

If the authentication and authorization result information includes the validity period of the authentication and authorization result, the second session management function may further release the session of the MBS (service) of the terminal device based on the validity period of the authentication and authorization result. For example, the second session management function releases the session of the MBS (service) of the terminal device after the authentication and authorization result expires or is invalid.

Optionally, if the fifth message includes the key information of the MBS (service), the second session management function may further send the key information of the MBS (service) to the terminal device.

After the terminal device receives the key information of the MBS (service), the terminal device uses a key of the MBS (service). For details, refer to the descriptions in Embodiment 1.2. Details are not described herein again.

It should be noted that, in this embodiment of this application, communication between the second session management function and the terminal device may be completed via an access and mobility management function (for example, an AMF). That is, the first session management function sends a message A to the terminal device. To be specific, the first session management function sends the message A to the access and mobility management function, the access and mobility management function receives the message A, the access and mobility management function sends the message A to the terminal device, and the terminal device receives the message A. Alternatively, the terminal device sends a message B to the first session management function. To be specific, the terminal device sends the message B to the access and mobility management function, the access and mobility management function receives the message B, the access and mobility management function sends the message B to the first session management function, and the first session management function receives the message B.

It may be understood that, in this embodiment of this application, the EAP authentication and/or authorization method is used as an example for description. For another authentication and/or authorization method, other information may be further exchanged between devices.

In Embodiment 4.2, a first MBS authentication and authorization function sends key information of an MBS (service) to a terminal device, to obtain a key in a new 5G architecture. For details, refer to Embodiment 1.2. A difference lies in that, that a first session management function sends the key information of the MBS (service) to the terminal device includes: The first session management function sends the key information of the MBS (service) to a second session management function, and the second session management function receives the key information of the MBS (service). The second session management function sends the key information of the MBS (service) to the terminal device, and the terminal device receives the key information of the MBS (service).

For usage of a key by the terminal device for the MBS (service), refer to the descriptions in Embodiment 1.1. Details are not described herein again.

In Embodiment 4.3, a first MBS authentication and authorization function may send a security policy of an MBS (service) to a first MBS user plane function, so that a network device obtains the security policy and determines how to execute the security policy in a new 5G architecture. For a process in which the network device obtains the security policy and determines how to execute the security policy in Embodiment 4.3, refer to Embodiment 1.3. Repeated parts are not described again.

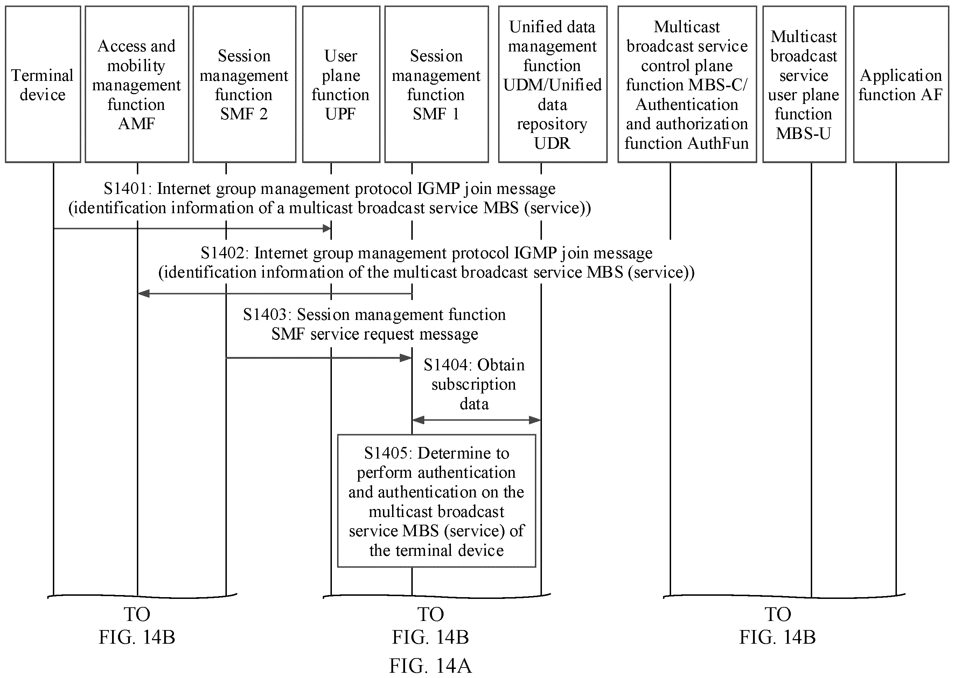

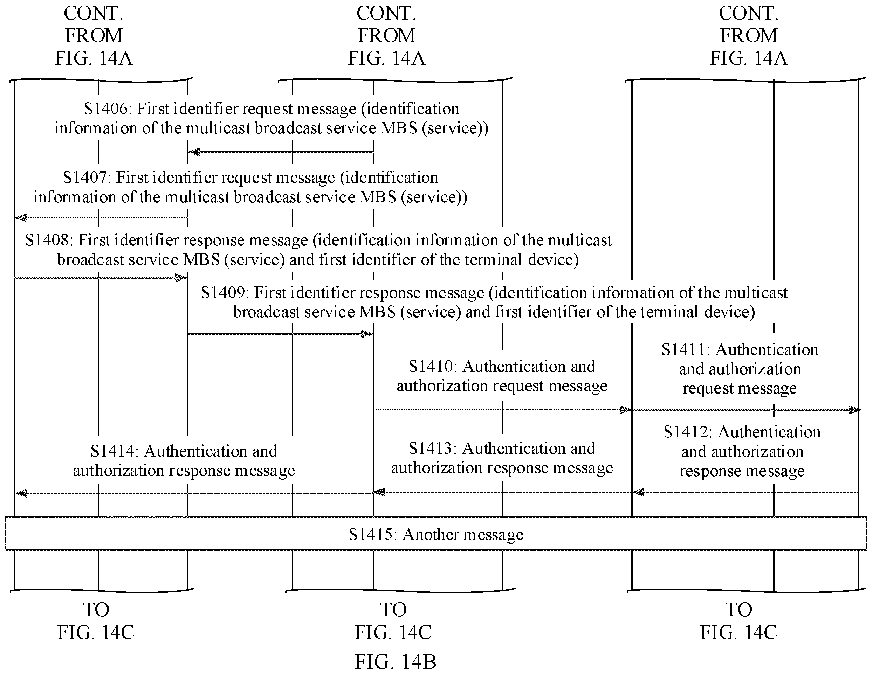

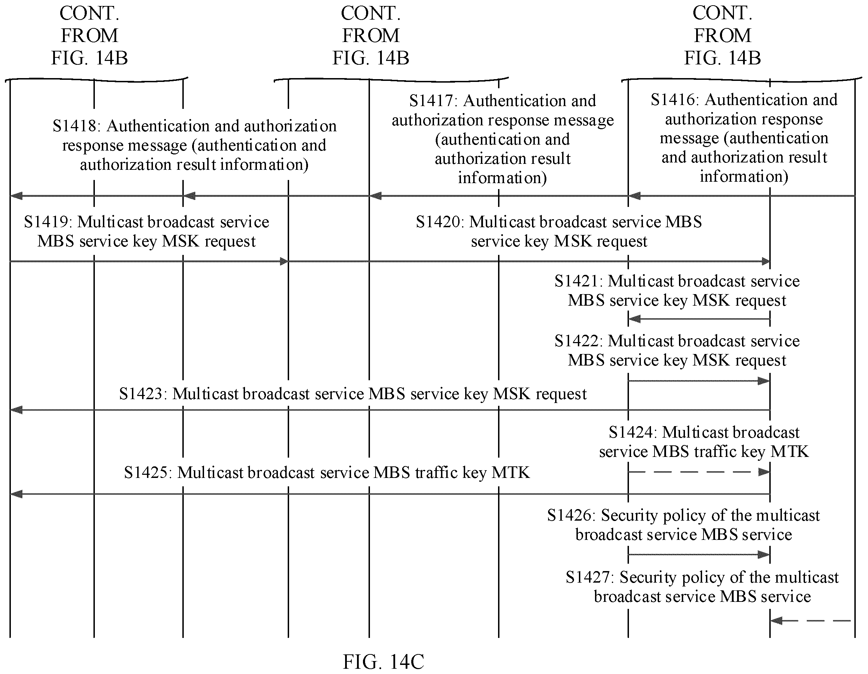

Embodiment 4.1, Embodiment 4.2, and Embodiment 4.3 may be used separately or in combination, to implement a registration procedure of the MBS (service) more completely. For example, as shown in FIG. 14A to FIG. 14C, the following steps are included.

S1401: A terminal device sends an IGMP join or MLR message to a UPF, where the IGMP join or MLR message includes an MBS service ID, and requests to use or join MBS (service) registration, obtains data of an MBS (service) corresponding to the MBS service ID, or requests to join a multicast group corresponding to the MBS service ID.

S1402: The UPF sends, to an SMF 2, a message indicating an IGMP join or MLR event and the MBS service ID.

The SMF 2 is the second session management function.

S1403: The SMF 2 sends an SMF service request message to an SMF 1, where the SMF service request message requests to use the MBS (service), requests to establish or modify an MBS session, or requests to activate an MBS context, and the SMF service request message includes the MBS service ID.

The SMF 2 is the first session management function.

Optionally, there may be another possible manner of the process of S1401 to S1403. For details, refer to FIG. 7 in the foregoing embodiment.

Optionally, S1404: The SMF 1 obtains subscription data of the MBS (service) from a UDMIUDR.

In a possible manner, the SMF 1 directly obtains the subscription data of the MBS (service) from the UDMIUDR.

In another possible manner, after the SMF 2 receives the IGMP join or MLR message, the SMF 2 obtains the subscription data of the MBS (service) from the UDM/UDR, and the SMF 2 sends the subscription data of the MBS (service) to the SMF 1.

S1405: The SMF 1 determines, based on the subscription data of the MBS (service), whether to perform authentication and authorization on the MBS (service) of the terminal device.

S1406: The SMF 1 sends a first identifier request message such as an EAP request message to the SMF 2, where the first identifier request message includes the MBS service ID and requests an MBS user ID.

S1407: The SMF 2 sends the first identifier request message to the terminal device.

It should be noted that the SMF 2 communicates with the terminal device via an AMF. To be specific, the SMF 2 sends a message to the terminal device via the AMF, and the terminal device sends a message to the SMF 2 via the AMF.

S1408: The terminal device sends a first identifier response message such as an EAP response message to the SMF 2, where the first identifier response message includes a GPSI, the MBS service ID, and the MBS user ID.

S1409: The SMF 2 sends the first identifier response message to the SMF 1.

S1410 to S1413 may be implemented in any one of the following manners:
Manner 1: S1410: The SMF 1 sends an authentication and authorization request message of the MBS (service) to an MBS-C/AuthFun, where the authentication and authorization request message includes the EAP response message, the GPSI, and the MBS service ID, and the EAP response message includes the MBS user ID.

S1413: The MBS-C/AuthFun returns an authentication and authorization response message of the MBS (service) to the SMF 1, where the authentication and authorization response message includes the EAP response message and the MBS service ID.

S1411 and S1412 may be omitted in Manner 1.

Manner 2: S1410: The SMF 1 sends an authentication and authorization request message of the MBS (service) to an MBS-C/AuthFun, where the authentication and authorization request message includes the EAP response message, the GPSI, and the MBS service ID, and the EAP response message includes the MBS user ID.

S1411: The MBS-C/AuthFun optionally sends the authentication and authorization request message to an AF via a proxy, where the authentication and authorization request message includes the EAP response message, the GPSI, and the MBS service ID, and the EAP response message includes the MBS user ID.

S1412: The AF optionally sends an authentication and authorization response message of the MBS (service) to the MBS-C/AuthFun via the proxy, where the authentication and authorization response message includes the EAP response message and the MBS service ID.

S1413: The MBS-C/AuthFun returns the authentication and authorization response message to the SMF 1, where the authentication and authorization response message includes the EAP response message and the MBS service ID.

Manner 3: S1410 and S1411. The SMF 1 sends an authentication and authorization request message of the MBS (service) to an AF, where the authentication and authorization request message includes the EAP response message, the GPSI, and the MBS service ID, and the EAP response message includes the MBS user ID.

S1412 and S1413: The AF returns an authentication and authorization response message of the MBS (service) to the SMF 1, where the authentication and authorization response message includes the EAP response message and the MBS service ID.

If the AF belongs to a third party, the MBS-C communicates with the AF via a proxy/NEF. That is, when the MBS-C sends a message to the AF, the MBS-C sends the message to the proxy/NEF, and the proxy/NEF sends the message to the AF. When the AF sends a message to the MBS-C, the AF sends the message to the proxy/NEF, and the proxy/NEF sends the message to the MBS-C.

If the AF belongs to the third party, the SMF communicates with the AF via a proxy/NEF/UPF. That is, when the SMF sends a message to the AF, the SMF sends the message to the proxy/NEF/UPF, and the proxy/NEF/UPF sends the message to the AF. When the AF sends a message to the SMF, the AF sends the message to the proxy/NEF/UPF, and the proxy/NEF/UPF sends the message to the SMF.

S1414: The SMF 1 sends the authentication and authorization response message to the terminal device, where the authentication and authorization response message includes the EAP response message and the MBS service ID.

The SMF 1 may send the EAP response message and the MBS service ID to the SMF 2, and the SMF 2 sends the EAP response message and the MBS service ID to the terminal device. Alternatively, the SMF 1 may send the EAP response message and the MBS service ID to the AMF, and the AMF sends the EAP response message and the MBS service ID to the terminal device.

S1415: The terminal device may further exchange another message with the AF depending on an MBS authentication and authorization method used between the terminal device and a network device. The another message exchanged between the terminal device and the AF is not limited in this embodiment of this application.

S1416 and S1417 may be implemented in any one of the following manners:
Manner 1: S1416: The AF sends an authentication and authorization response message to the MBS-C/AuthFun, where the authentication and authorization response message includes authentication and authorization result information of the MBS (service) and the MBS service ID, the authentication and authorization result information indicates authentication and authorization success or failure, and if there is the authentication and authorization success, the authentication and authorization result information may further send a validity period of an authentication and authorization result.

S1417: The MBS-C/AuthFun sends the authentication and authorization response message to the SMF 1, where the authentication and authorization response message includes the authentication and authorization result information of the MBS (service) and the MBS service ID.

Manner 2: S1417: The MBS-C/AuthFun sends an authentication and authorization response message to the SMF 1, where the authentication and authorization response message includes authentication and authorization result information of the MBS (service) and the MBS service ID.

S1416 may be omitted in Manner 2.

Manner 3: S1416 and S1417: The AF sends an authentication and authorization response message to the SMF 1, where the authentication and authorization response message includes an authentication and authorization result of the MBS (service) and the MBS service ID.

S1418: The SMF 1 sends the authentication and authorization response message to the terminal device via the SMF 2, where the authentication and authorization response message includes the authentication and authorization result of the MBS (service) and the MBS service ID.

In the authentication and authorization process in S1401 to S1418, the terminal device and the MBS-C/AF may alternatively negotiate a used key of the MBS (service).

It may be understood that the MBS-C or the AF may alternatively be replaced with another network function for implementation, for example, an AAA server.

S1419: The terminal device sends an MSK request message to the UPF, where the MSK request message includes an MSK ID.

S1420: The UPF sends the MSK request message to an MBS-U.

S 1421 and S 1422 may be implemented in any one of the following manners:
Manner 1: S1421: The MBS-U obtains an MSK from the MBS-C, and the MBS-U sends the MSK request message to the MBS-C.

S1422: The MBS-C sends a corresponding MSK and MSK ID to the MBS-U.

Manner 2: S1421: The MBS-U obtains an MSK from the AF, and the MBS-U sends the MSK request message to the AF.

S1422: The AF sends a corresponding MSK and MSK ID to the MBS-U.

Manner 2 is not shown in the figure.

Manner 3: The MBS-U generates a corresponding MSK. Optionally, before S1420, the MBS-U may generate the corresponding MSK.

S1423: The MBS-U sends the corresponding MSK and MSK ID to the terminal device. The terminal device stores the MSK and the MSK ID.

The MBS-U and the terminal device may communicate with each other via the UPF. For example, the MBS-U may send the MSK and the MSK ID to the terminal device via the UPF. To be specific, the MBS-U sends the MSK and the MSK ID to the UPF, and the UPF sends the MSK and the MSK ID to the terminal device.

Manner 3 is not shown in the figure.

The terminal device may obtain an MTK in any one of the following manners in S 1424 and S 1425.

Manner 1: S1425: The MBS-U generates an MTK, and the MBS-U sends the MTK and an MTK ID to the terminal device.

An occasion for generating the MTK by the MBS-U is not limited. A trigger condition for sending the MTK and the MTK ID by the MBS-U may be that the MBS-U determines that there is to-be-sent data of the MBS (service).

S1424 may be omitted in the manner 1.

Manner 2: Optionally, S1424: The MBS-U sends an MTK request message to the MBS-C, where the MTK request message includes an MTK ID. The MBS-C sends an MTK and the MTK ID to the MBS-U.

S1425: The MBS-U sends the MTK and the MTK ID to the terminal device.

The MBS-U may use the MTK to protect sent data of the MBS (service). Optionally, the MTK may be protected by using the MSK. After the terminal device receives the protected MTK or a protected message carrying the MTK, the terminal device obtains the MTK by using the MSK.

Manner 3: S1424: The MBS-C generates an MTK, and the MBS-C sends the MTK and an MTK ID to the MBS-U.

S1425: The MBS-U sends the MTK and the MTK ID to the terminal device.

Manner 3 is not shown in the figure.

Manner 4: S1424: The AF generates an MTK, and the AF sends the MTK and an MTK ID to the MBS-U.

S1425: The MBS-U sends the MTK and the MTK ID to the terminal device.

Manner 4 is not shown in the figure.

An occasion for obtaining the MTK by the terminal device is not limited in this embodiment of this application. For example, after authentication and authorization on the MBS (service), the terminal device obtains the MTK and the MTK ID.

The MBS-U may obtain a security policy in any one of the following manners in S1426 and S1427. Either of the manners in S1426 and S1427 may be used.

Manner 1: S1426: The MBS-C sends a security policy of the MBS (service) to the MBS-U.

The MBS-U determines, according to the security policy, whether to protect to-be-sent data of the MBS (service).

Manner 2: S1427: The AF sends a security policy of the MBS (service) to the MBS-U.

An occasion for obtaining the security policy by the MBS-U is not limited in this embodiment of this application.

It may be understood that the MBS-C and the AF may alternatively be replaced with another network function, for example, an MBSF.

It should be noted that the method in Embodiment 4 is described by using a 5G architecture as an example. However, the method is not limited to being applied to the 5G architecture, and is also applicable to a future network architecture (for example, 6G).

With reference to the accompanying drawings, the following describes apparatuses configured to implement the foregoing methods in embodiments of this application. Therefore, all the foregoing content may be used in the following embodiments. Repeated content is not described again.

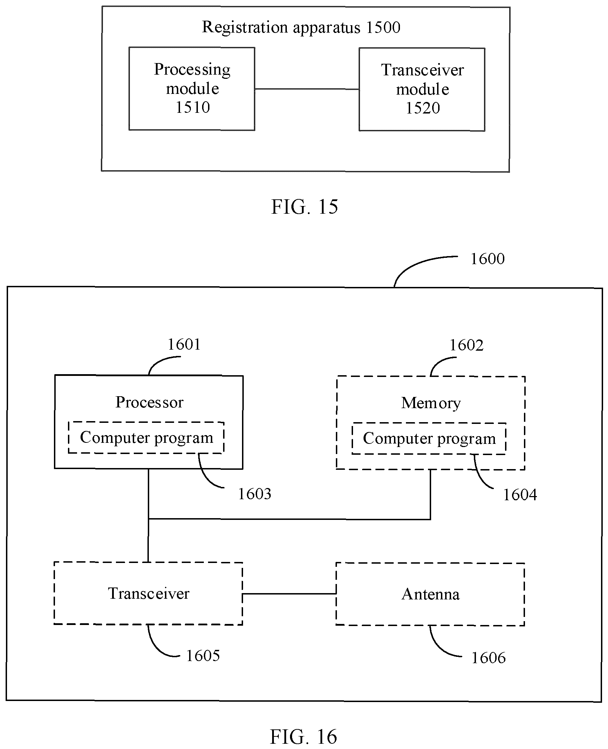

FIG. 15 is a schematic block diagram of a registration apparatus 1500 according to an embodiment of this application. The registration apparatus 1500 includes a processing module 1510 and a transceiver module 1520. For example, the registration apparatus 1500 may be a network device or a terminal device, a chip used in the network device or the terminal device, or another combined device or component that has a function of the network device or the terminal device. When the registration apparatus 1500 is the network device or the terminal device, the transceiver module 1520 may be a transceiver, where the transceiver may include an antenna, a radio frequency circuit, and the like; the processing module 1510 may be a processor, for example, a baseband processor, where the baseband processor may include one or more central processing units (central processing units, CPUs). When the registration apparatus 1500 is the component that has the function of the network device or the terminal device, the transceiver module 1520 may be a radio frequency unit, and the processing module 1510 may be a processor, for example, a baseband processor. When the registration apparatus 1500 is a chip system, the transceiver module 1520 may be an input/output interface of a chip (for example, a baseband chip), and the processing module 1510 may be a processor of the chip system, and may include one or more central processing units. It should be understood that the processing module 1510 in this embodiment of this application may be implemented by a processor or a processor-related circuit component, and the transceiver module 1520 may be implemented by a transceiver or a transceiver-related circuit component.

For example, the processing module 1510 may be configured to perform all operations except receiving and sending operations performed by the network device or the terminal device in the embodiments shown in FIG. 4 to FIG. 14C. The transceiver module 1520 may be configured to perform all receiving and sending operations performed by the network device or the terminal device in the embodiments shown in FIG. 4 to FIG. 14C, and/or configured to support another process of the technology described in this specification.

In addition, the transceiver module 1520 may be one functional module. The functional module can implement both a sending operation and a receiving operation. For example, the transceiver module 1520 may be configured to perform all sending operations and receiving operations performed by the network device or the terminal device in the embodiments shown in FIG. 4 to FIG. 14C. For example, when a sending operation is performed, it may be considered that the transceiver module 1520 is a sending module. When a receiving operation is performed, it may be considered that the transceiver module 1520 is a receiving module. Alternatively, the transceiver module 1520 may include two functional modules. The transceiver module 1520 may be considered as a general term of the two functional modules, and the two functional modules are respectively a sending module and a receiving module. The sending module is configured to implement a sending operation. For example, the sending module may be configured to perform all sending operations performed by the network device or the terminal device in any one of the embodiments shown in FIG. 4 to FIG. 14C. The receiving module is configured to implement a receiving operation. For example, the receiving module may be configured to perform all receiving operations performed by the network device or the terminal device in the embodiments shown in FIG. 4 to FIG. 14C.

In an embodiment, the registration apparatus 1500 is applied to a first session management function, and the first session management function belongs to a network device.

The transceiver module 1520 is configured to receive identification information of an MBS (service) from a terminal device.

The processing module 1510 is configured to: determine, based on the identification information of the MBS (service), to perform authentication and authorization on the MBS (service) of the terminal device; and initiate the authentication and authorization on the MBS (service) of the terminal device.

In a possible implementation, the processing module 1510 is specifically configured to: when determining, based on the identification information of the MBS (service), to perform authentication and authorization on the MBS (service) of the terminal device, determine, based on subscription data of the MBS (service), to perform authorization on a device that requests to use the MBS (service) before using the MBS (service); and determine to perform authentication and authorization on the MBS (service) of the terminal device.

In a possible implementation, the processing module 1510 is specifically configured to: when initiating the authentication and authorization on the MBS (service) of the terminal device, send a first message to the terminal device via the transceiver module 1520, where the first message includes the identification information of the MBS (service); and receive a second message from the terminal device via the transceiver module 1520, where the second message includes a first identifier of the terminal device and the identification information of the MBS (service), and the first identifier is an identifier used when the terminal device uses the MBS (service).

In a possible implementation, the transceiver module 1520 is further configured to: after receiving the second message from the terminal device, send a third message to a first MBS authentication and authorization function, where the third message includes the identification information of the MBS (service) and the first identifier of the terminal device, and the third message requests to perform authentication and authorization on the MBS (service) of the terminal device.

In a possible implementation, the transceiver module 1520 is further configured to: after the first MBS authentication and authorization function sends the third message, receive a fourth message from the first MBS authentication and authorization function, where the fourth message includes an authentication and authorization result, and the authentication and authorization result includes success or failure.

In a possible implementation, the fourth message further includes a validity period of the authentication and authorization result, and/or a key and an optional key identifier that are of the MBS (service), and the key of the MBS (service) is used to protect data of the MBS (service).

In a possible implementation, the transceiver module 1520 is further configured to: after receiving the fourth message from the first MB S authentication and authorization function, send the authentication and authorization result to the terminal device.

In a possible implementation, the transceiver module 1520 is further configured to send the validity period of the authentication and authorization result to the terminal device.

In a possible implementation, the transceiver module 1520 is further configured to send, to the terminal device, the key and the optional key identifier that are of the MBS (service).

In a possible implementation, the fourth message further includes a validity period of the authentication and authorization result, and the processing module 1510 is further configured to release a session of the MBS (service) of the terminal device based on the validity period of the authentication and authorization result.

In a possible implementation, the transceiver module 1520 is specifically configured to: when receiving the identification information of the MBS (service) from the terminal device, receive the identification information of the MBS (service) from the terminal device via an access network device; receive the identification information of the MBS (service) from the terminal device via an access and mobility management function; or receive the identification information of the MBS (service) from the terminal device via a user plane function.

In another embodiment, the registration apparatus 1500 is applied to a first MBS authentication and authorization function, and the first MBS authentication and authorization function belongs to a network device.

The processing module 1510 is configured to receive a third message from a first session management function via the transceiver module 1520, where the third message includes identification information of an MBS (service) and a first identifier of a terminal device, the third message requests to perform authentication and authorization on the MB S (service) of the terminal device, and the first identifier is an identifier used when the terminal device uses the MBS (service); and send a fourth message to the first session management function via the transceiver module 1520, where the fourth message includes an authentication and authorization result, and the authentication and authorization result includes success or failure.

In a possible implementation, the fourth message further includes a validity period of the authentication and authorization result, and/or a key and an optional key identifier that are of the MBS (service), and the key of the MBS (service) is used to protect data of the MBS (service).

In a possible implementation, the transceiver module 1520 is further configured to: after receiving the fourth message from the first session management function, send the key and the optional key identifier that are of the MBS (service) to the terminal device.

In a possible implementation, the processing module 1510 is further configured to: before sending the key of the MBS (service) and the key identifier to the terminal device via the transceiver module 1520, determine that authentication and authorization on usage of the MBS (service) by the terminal device is success; receive a fifth message from the terminal device via the transceiver module 1520, where the fifth message requests the key of the MBS (service); generate or update the key of the MBS (service); or determine to start transmitting the data of the MBS (service).

In a possible implementation, the transceiver module 1520 is specifically configured to: when sending the key of the MBS (service) to the terminal device, send the key of the MBS (service) to the terminal device via the first session management function; send the key of the MBS (service) to the terminal device via a user plane function UPF; or send the key of the MBS (service) to the terminal device via a first MBS user plane function.

In still another embodiment, the registration apparatus 1500 is applied to a terminal device.

The processing module 1510 is configured to: send identification information of a multicast broadcast service MBS (service) to a first session management function via the transceiver module 1520; and receive an authentication and authorization result from the first session management function via the transceiver module 1520, where the authentication and authorization result includes success or failure.

In a possible implementation, the transceiver module 1520 is further configured to: after sending the identification information of the MBS (service) to the first session management function, receive a first message from the first session management function, where the first message includes the identification information of the MBS (service); and send a second message to the first session management function, where the second message includes the identification information of the MBS (service) and a first identifier of the terminal device, and the first identifier is an identifier used when the terminal device uses the MBS (service).

In a possible implementation, the transceiver module 1520 is further configured to receive a key of the MBS (service) from a first MBS authentication and authorization function, where the key of the MBS (service) is used by the terminal device to decrypt protected data of the MBS (service), or is used by the terminal device to verify whether data of the MBS (service) is tampered with.

In a possible implementation, the transceiver module 1520 is further configured to: before receiving the key of the MBS (service) from the first MBS authentication and authorization function, send a fifth message to the first MBS authentication and authorization function, where the fifth message includes the identification information of the MBS (service) and the first identifier of the terminal device, or a key identifier of the MBS (service) and the first identifier of the terminal device, and the fifth message requests the key of the MBS (service).

In a possible implementation, the transceiver module 1520 is specifically configured to: when receiving the key of the MBS (service) from the first MBS authentication and authorization function, receive the key of the MB S (service) from the first MB S authentication and authorization function via the first session management function; receive the key of the MBS (service) from the first MBS authentication and authorization function via a user plane function UPF; or receive the key of the MBS (service) from the first MBS authentication and authorization function via a first MBS user plane function.

In still another embodiment, the registration apparatus 1500 is applied to a first MBS authentication and authorization function, and the first MBS authentication and authorization function belongs to a network device.

The processing module 1510 is configured to send a security policy of an MBS (service) to a first MBS user plane function via the transceiver module 1520, where the security policy of the MBS (service) indicates to perform security protection on data of the MBS (service), or indicates not to perform security protection on the data of the MBS (service).

In a possible implementation, the transceiver module 1520 is further configured to: before sending the security policy of the MBS (service) to the first MBS user plane function, send a sixth message to a UDM or a UDR, where the sixth message includes identification information of the MBS (service); and receive the security policy of the MBS (service) from the UDM or the UDR.

In a possible implementation, the transceiver module 1520 is further configured to send a key and an optional key identifier that are of the MBS (service) to the first MBS user plane function, where the key of the MBS (service) is used to protect the data of the MBS (service).

In still another embodiment, the registration apparatus 1500 is applied to a first MBS user plane function, and the first MBS user plane function belongs to a network device.

The transceiver module 1520 is configured to receive a security policy of an MBS (service) from a first MBS authentication and authorization function, where the security policy of the MBS (service) indicates to perform security protection on data of the MBS (service), or indicates not to perform security protection on the data of the MBS (service) of the terminal device.

The processing module 1510 is configured to: perform security protection on the data of the MBS (service) by using a key of the MBS (service), or not to protect the data of the MBS (service), according to the security policy of the MBS (service).

In a possible implementation, the transceiver module 1520 is further configured to receive the key and an optional key identifier that are of the MBS (service) from the first MBS authentication and authorization function.

In a possible implementation, the processing module 1510 is further configured to generate the key of the MBS (service).

In an embodiment, the registration apparatus 1500 is applied to a first MBS user plane function, and the first MBS user plane function belongs to a network device.

The processing module 1510 is configured to: receive a first message from a terminal device via the transceiver module 1520, where the first message includes identification information of an MBS (service); and send a second message to a first MBS authentication and authorization function, where the second message carries the identification information of the MBS (service).

In a possible implementation, the transceiver module 1520 is further configured to: after sending the second message to the first MBS authentication and authorization function, receive a third message sent by the first MBS authentication and authorization function, where the third message includes the identification information of the MBS (service) and an authentication and authorization result, and the authentication and authorization result include authentication and authorization success or failure; and send the authentication and authorization result, or an identifier of the MBS user service and the authentication and authorization result to the terminal device.

In a possible implementation, the transceiver module 1520 is specifically configured to: when receiving the first message from the terminal device, receive the first message from the terminal device via a user plane function UPF.

In another embodiment, the registration apparatus 1500 is applied to a first MBS user plane function.

The processing module 1510 is configured to obtain a key and an optional key identifier that are of an MBS (service).

The transceiver module 1520 is configured to send the key and the optional key identifier that are of the MBS (service) to a terminal device, where the key of the MBS is used to protect data of the MBS (service).

In a possible implementation, the processing module 1510 is configured to: when obtaining the key and the optional key identifier that are of the MBS (service), receive the key and the optional key identifier that are of the MBS from the first MBS authentication and authorization function via the transceiver module 1520.

In a possible implementation, the processing module 1510 is configured to: when obtaining the key and the optional key identifier that are of the MBS (service), generate the key and the optional key identifier that are of the MBS (service).

In a possible implementation, the processing module 1510 is further configured to: before obtaining the key and the optional key identifier that are of the MBS (service), determine that there is to-be-sent data of the MBS (service), and security protection needs to be performed on the data of the MBS (service).

In a possible implementation, the transceiver module 1520 is further configured to: before receiving the key and the optional key identifier that are of the MBS from the first MBS authentication and authorization function, send a fourth message to the first MBS authentication and authorization function, where the fourth message carries identification information of the MBS (service).

In a possible implementation, the transceiver module 1520 is further configured to: before sending the key and the optional key identifier that are of the MBS (service) to the terminal device, receive a fifth message sent by the terminal device, where the fifth message carries the identification information of the MBS (service) and a first identifier of the terminal device, or a key identifier of the MBS (service) and the first identifier of the terminal device.

In a possible implementation, the transceiver module 1520 is specifically configured to: when sending the key and the optional key identifier that are of the MBS (service) to the terminal device, send the key and the optional key identifier that are of the MBS (service) to a user plane function UPF.

In a possible implementation, the transceiver module 1520 is specifically configured to: when receiving the fifth message sent by the terminal device, receive the fifth message from the terminal device via the user plane function UPF.

In still another embodiment, the registration apparatus 1500 is applied to a terminal device.

The processing module 1510 is configured to: send a first message to a first MBS user plane function via the transceiver module 1520, where the first message includes identification information of an MBS (service) and a first identifier of the terminal device; and receive an authentication and authorization result of the first MBS user plane function, or an identifier of the MBS user service and the authentication and authorization result. The authentication and authorization result includes success or failure.

In a possible implementation, the transceiver module 1520 is further configured to: after sending the first message to the first MBS user plane function, receive a key and an optional key identifier that are of the MBS and sent by the first MBS user plane function, where the key of the MBS (service) is used by the terminal device to decrypt protected data of the MBS (service), or is used by the terminal device to verify whether data of the MBS (service) is tampered with.

In a possible implementation, the transceiver module 1520 is further configured to: before receiving the key and the optional key identifier that are of the MBS and sent by the first MBS user plane function, send a fifth message to the first MBS user plane function, where the fifth message includes the identification information of the MBS (service) and the first identifier of the terminal device, or a key identifier of the MBS (service) and the first identifier of the terminal device.

In an embodiment, the registration apparatus 1500 is applied to an authentication and authorization function, and the authentication and authorization function belongs to a network device.

The processing module 1510 is configured to: receive a first message from an access and mobility management function via the transceiver module 1520, where the first message includes identification information of an MBS (service) and a first identifier; send a second message to a first MBS authentication and authorization function, where the second message includes the identification information of the MBS (service) and the first identifier; receive a third message from the first MBS authentication and authorization function, where the third message includes an authentication and authorization result and the identification information of the MBS (service), and the authentication and authorization result includes authentication and authorization success or failure; and send a fourth message to the access and mobility management function, where the fourth message includes the authentication and authorization result and the identification information of the MBS (service).

In a possible implementation, the first message may further include a second identifier of a terminal device.

In a possible implementation, the third message further includes the first identifier of the terminal device.

In a possible implementation, the transceiver module 1520 is further configured to: after receiving the third message from the first MBS authentication and authorization function, send the identification information of the MBS (service), the authentication and authorization result, and the second identifier of the terminal device to a UDMIUDR.

In a possible implementation, the transceiver module 1520 is further configured to: after receiving the third message from the first MBS authentication and authorization function, send the identification information of the MBS (service), the authentication and authorization result, the second identifier of the terminal device, and the first identifier to the UDM/UDR.

In another embodiment, the registration apparatus 1500 is applied to an access and mobility management function, and the access and mobility management function belongs to a network device.

The transceiver module 1520 is configured to receive a fifth message from a terminal device, where the fifth message carries identification information of an MBS (service).

The processing module 1510 is configured to determine, based on the identification information of the MBS (service), to perform authentication and authorization on usage of the MBS (service) by the terminal device; and initiate the authentication and authorization on usage of the MBS (service) by the terminal device.

In a possible implementation, the processing module 1510 is specifically configured to: when determining, based on the identification information of the MBS (service), to perform authentication and authorization on usage of the MBS (service) by the terminal device, obtain subscription data of the MBS (service) based on the identification information of the MBS (service); and determine, based on the subscription data corresponding to the identification information of the MBS (service), to perform authentication and authorization on usage of the MBS (service) by the terminal device.

In a possible implementation, the fifth message may further include a first identifier of the terminal device.

In a possible implementation, the processing module 1510 is specifically configured to: when initiating the authentication and authorization on usage of the MBS (service) by the terminal device, send a first message to an authentication and authorization function via the transceiver module 1520, where the first message includes the identification information of the MBS (service) and the first identifier; and receive a fourth message from the authentication and authorization function, where the fourth message includes an authentication and authorization result and the identification information of the MBS (service), and the authentication and authorization result includes authentication and authorization success or failure.

In a possible implementation, the first message may further include a second identifier of the terminal device.

In a possible implementation, the transceiver module 1520 is further configured to: before initiating the authentication and authorization on usage of the MBS (service) by the terminal device, send a sixth message to the terminal device, where the sixth message includes the identification information of the MBS (service); and receive a seventh message from the terminal device, where the seventh message includes a first user identifier and the identification information of the MBS (service).

In a possible implementation, the transceiver module 1520 is further configured to: after receiving the fourth message from the authentication and authorization function, send the authentication and authorization result and the identification information of the MBS (service) to the terminal device.

In a possible implementation, the transceiver module 1520 is further configured to: after receiving the fourth message from the authentication and authorization function, send the identification information of the MBS (service), the authentication and authorization result, and the second identifier of the terminal device to a UDM/UDR.

In a possible implementation, the transceiver module 1520 is further configured to: after receiving the fourth message from the authentication and authorization function, send the identification information of the MBS (service), the authentication and authorization result, the second identifier of the terminal device, and the first identifier to the UDM/LTDR.

In another embodiment, the registration apparatus 1500 is applied to an access and mobility management function.

The processing module 1510 is configured to: receive a key and an optional key identifier that are of an MBS (service) from an authentication and authorization function via the transceiver module 1520, where the key of the MBS (service) is used to protect data of the MBS (service); and send the key and the optional key identifier that are of the MBS (service) to a terminal device via the transceiver module 1520.

In a possible implementation, the transceiver module is further configured to: before receiving the key and the optional key identifier that are of the multicast broadcast service MBS (service) from the authentication and authorization function, receive a tenth message from the terminal device, where the tenth message includes identification information of the MBS (service) or a key identifier of the MBS (service); and send an eleventh message to the authentication and authorization function, where the eleventh message includes the identification information of the MBS (service) or the key identifier of the MBS (service).

In a possible implementation, the transceiver module is specifically configured to: when receiving the key and the optional key identifier that are of the MBS (service) from the authentication and authorization function, receive the identification information of the MBS (service) and a first identifier from the terminal device; send a first message to the authentication and authorization function, where the first message includes the identification information of the MBS (service) and the first identifier; and receive a fourth message sent by the authentication and authorization function, where the fourth message includes the key and the optional key identifier that are of the MBS (service).

In a possible implementation, the fourth message further includes the identification information of the MBS user service and an authentication and authorization result, and the authentication and authorization result includes authentication and authorization success or failure.

In still another embodiment, the registration apparatus 1500 is applied to an authentication and authorization function.

The processing module 1510 is configured to: receive a key of an MBS (service) and an optional key identifier from a first MBS authentication and authorization function via the transceiver module 1520; and send the key and the optional key identifier that are of the MBS (service) to an access and mobility management function.

In a possible implementation, the transceiver module 1520 is further configured to: before receiving the key and the optional key identifier that are of the multicast broadcast service MBS (service) from the first MBS authentication and authorization function, receive an eleventh message from the access and mobility management function, where the eleventh message includes identification information of the MBS (service) or a key identifier of the MBS (service); and send the identification information of the MBS (service) or the key identifier of the MBS (service) to the first MBS authentication and authorization function.

In a possible implementation, the transceiver module 1520 is specifically configured to: when receiving the key and the optional key identifier that are of the MBS (service) from the first MBS authentication and authorization function, receive a first message from the access and mobility management function, where the first message includes the identification information of the MBS (service) and a first identifier; send a second message to the first MBS authentication and authorization function, where the second message includes the identification information of the MBS (service) and the first identifier; and receive a third message from the first MBS authentication and authorization function, where the third message includes the key of the MBS (service) and the key identifier.

In a possible implementation, the third message further includes the identification information of the MBS user and an authentication and authorization result, and the authentication and authorization result includes authentication and authorization success or failure.

In an embodiment, the registration apparatus 1500 is applied to a first session management function.

The processing module 1510 is configured to determine, based on subscription data of an MBS (service) of a terminal device, to perform authentication and authorization on the MBS (service) of the terminal device.

The transceiver module 1520 is configured to: send a first user identifier request message and identification information of the MBS (service) to a second session management function; receive a first user identifier and the identification information of the MBS (service) from the second session management function; and send the first user identifier and the identification information of the MBS (service) to a first MBS authentication and authorization function.

In a possible implementation, the transceiver module 1520 is further configured to: before determining, based on the subscription data of the multicast broadcast service MBS (service) of the terminal device, to perform authentication and authorization on the MB S (service) of the terminal device, receive the subscription data of the MB S (service) from a UDM or a UDR; or receive the subscription data of the MBS (service) from the second session management function.

In a possible implementation, the transceiver module 1520 is further configured to: before determining, based on the subscription data of the multicast broadcast service MBS (service) of the terminal device, to perform authentication and authorization on the MBS (service) of the terminal device, receive a first message from the second session management function, where the first message includes the identification information of the MBS (service).

In a possible implementation, the transceiver module 1520 is further configured to: after the first MBS authentication and authorization function sends the first user identifier and the identification information of the MB S (service), receive a second message from the first MBS authentication and authorization function, where the second message includes an authentication and authorization result and the identification information of the MBS (service), and the authentication and authorization result indicates that authentication and authorization on the MBS (service) of the terminal device succeeds or fails.

In a possible implementation, the transceiver module 1520 is further configured to: after receiving the second message from the first MBS authentication and authorization function, send the authentication and authorization result and the identification information of the MBS (service) to the second session management function.

In another embodiment, the registration apparatus 1500 is applied to a first MBS user plane function.

The processing module 1510 is configured to obtain a key of an MBS (service) and an optional key identifier, where the key of the MBS (service) is used to protect data of the MBS (service).

The transceiver module 1520 is configured to send the key and the optional key identifier that are of the MBS (service) to a terminal device.

In a possible implementation, the processing module 1510 is specifically configured to: when obtaining the key and the optional key identifier that are of the MBS (service), generate the key of the MBS (service).

In a possible implementation, the processing module 1510 is specifically configured to: when obtaining the key and the optional key identifier that are of the MBS (service), receive the key and the optional key identifier that are of the MBS (service) from a first MBS authentication and authorization function via the transceiver module 1520.

In a possible implementation, the transceiver module 1520 is specifically configured to: when sending the key and the optional key identifier that are of the MBS (service) to the terminal device, send the key and the optional key identifier that are of the MBS (service) to a user plane function.

In a possible implementation, the transceiver module 1520 is further configured to: before obtaining the key and the optional key identifier that are of the multicast broadcast service MBS (service), receive a key identifier of the MBS or identification information of the MBS (service) from the user plane function.

In a possible implementation, the transceiver module 1520 is further configured to: before receiving the key and the optional key identifier that are of the MBS (service) from the first MBS authentication and authorization function, send the key identifier of the MBS (service) or the identification information of the MBS (service) to the first MBS authentication and authorization function.

For other functions that can be implemented by the measurement apparatus 600, refer to related descriptions of the embodiments shown in FIG. 4 to FIG. 14C. Details are not described again.

An embodiment of this application further provides a registration apparatus. The registration apparatus may be a network device or a terminal device. The registration apparatus may be configured to perform actions performed by the network device or the terminal device in the foregoing method embodiments.

Based on a same concept as the foregoing registration method, as shown in FIG. 16, an embodiment of this application further provides a registration apparatus 1600. The registration apparatus 1600 may be configured to implement the method performed by the network device or the terminal device in the foregoing method embodiments. Refer to the descriptions in the foregoing method embodiments. The registration apparatus 1600 may be a network device or a terminal device, or may be located in the network device or the terminal device.

The registration apparatus 1600 includes one or more processors 1601. The processor 1601 may be a general-purpose processor, a dedicated processor, or the like. For example, the processor may be a baseband processor or a central processing unit. The baseband processor may be configured to process a communication protocol and communication data. The central processing unit may be configured to control the registration apparatus (for example, a network device, a terminal device, a vehicle-mounted device, or a chip), execute a software program, and process data of the software program. The registration apparatus 1600 may include a transceiver unit, configured to input (receive) and output (send) signals. For example, the transceiver unit may be a transceiver or a radio frequency chip.

The registration apparatus 1600 includes the one or more processors 1601. The one or more processors 1601 may implement the method performed by the network device or the terminal device in the foregoing embodiments.

Optionally, the processor 1601 may further implement another function in addition to the methods in the foregoing embodiments. Optionally, in an implementation, the processor 1601 may execute computer programs, so that the registration apparatus 1600 performs the method performed by the network device or the terminal device in the foregoing method embodiments. All or some of the computer programs may be stored in the processor 1601, for example, a computer program 1603; or may be stored in a memory 1602 coupled to the processor 1601, for example, a computer program 1604. Alternatively, computer programs 1603 and 1604 may be used together to enable the registration apparatus 1600 to perform the method performed by the network device or the terminal device in the foregoing method embodiments.

In another possible implementation, the registration apparatus 1600 may alternatively include a circuit. The circuit may implement functions performed by the network device or the terminal device in the foregoing method embodiments.

In another possible implementation, the registration apparatus 1600 may include one or more memories 1602. The one or more memories 1602 store a computer program 1604. The computer program may be run on the processor, so that the registration apparatus 1600 performs the registration methods in the foregoing method embodiments. Optionally, the memory may further store data. Optionally, the processor may alternatively store a computer program and/or data. For example, the one or more memories 1602 may store the association or the correspondence in the foregoing embodiments, or the related parameter or table in the foregoing embodiments. The processor and the memory may be separately disposed, or may be integrated with or coupled to each other.

In another possible implementation, the registration apparatus 1600 may further include a transceiver 1605. The processor 1601 may be referred to as a processing unit, and controls the registration apparatus (for example, a base station or a terminal device). The transceiver 1605 may be referred to as a transceiver machine, a transceiver circuit, or a transceiver unit, and is configured to implement receiving and sending of data or control signaling.

For example, if the registration apparatus 1600 is a chip used in a communication device or another combined device or component that has a function of the communication device, the registration apparatus 1600 may include the transceiver 1605.

In another possible implementation, the registration apparatus 1600 may further include a transceiver 1605 and an antenna 1606. The processor 1601 may be referred to as a processing unit, and controls the registration apparatus (for example, a base station or a terminal device). The transceiver 1605 may be referred to as a transceiver machine, a transceiver circuit, or a transceiver, and is configured to implement a transceiver function of the apparatus via the antenna 1606.

It should be noted that, the processor in this embodiment of this application may be an integrated circuit chip, and has a signal processing capability. In an implementation process, steps in the foregoing method embodiments may be implemented by using an integrated logic circuit of hardware in the processor, or by using a computer program in a form of software. The processor may be a general-purpose processor, a digital signal processor (digital signal processor, DSP), an application-specific integrated circuit (application-specific integrated circuit, ASIC), a field programmable gate array (field programmable gate array, FPGA) or another programmable logic device, a discrete gate or a transistor logic device, or a discrete hardware component. The processor may implement or perform the methods, steps, and logical block diagrams disclosed in embodiments of this application. The general-purpose processor may be a microprocessor, or the processor may be any conventional processor or the like. Steps of the methods disclosed with reference to embodiments of this application may be directly executed and accomplished by using a hardware decoding processor, or may be executed and accomplished by using a combination of hardware in a decoding processor and a software module. The software module may be located in a mature storage medium in the art, such as a random access memory, a flash memory, a read-only memory, a programmable read-only memory, an electrically erasable programmable memory, or a register. The storage medium is located in the memory, and the processor reads information in the memory and completes the steps in the foregoing methods in combination with hardware of the processor.

It may be understood that the memory in this embodiment of this application may be a volatile memory or a non-volatile memory, or may include both a volatile memory and a non-volatile memory. The non-volatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM), which is used as an external cache. Through examples rather than limitative descriptions, RAMs in many forms may be used, for example, a static random access memory (static RAM, SRAM), a dynamic random access memory (dynamic RAM, DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchlink dynamic random access memory (synchlink DRAM, SLDRAM), and a direct rambus random access memory (direct rambus RAM, DR RAM). It should be noted that the memories in the system and method described in this specification are intended to include but not limited to these memories and any memory of another appropriate type.

An embodiment of this application further provides a computer-readable storage medium. The computer-readable storage medium stores a computer program. When the computer program is executed by a computer, the method in any one of the foregoing method embodiments that is applied to the network device or the terminal device is implemented.

An embodiment of this application further provides a computer program product. When the computer program product is executed by a computer, the method in any one of the foregoing method embodiments that is applied to the network device or the terminal device is implemented.

All or some of the foregoing embodiments may be implemented by using software, hardware, firmware, or any combination thereof. When software is used to implement embodiments, all or some of embodiments may be implemented in a form of a computer program product. The computer program product includes one or more computer programs. When the computer programs are loaded and executed on a computer, all or some of the procedure or functions according to embodiments of this application are generated. The computer may be a general-purpose computer, a dedicated computer, a computer network, or another programmable apparatus. The computer programs may be stored in a computer-readable storage medium or may be transmitted from a computer-readable storage medium to another computer-readable storage medium. For example, the computer programs may be transmitted from a website, computer, server, or data center to another website, computer, server, or data center in a wired (for example, a coaxial cable, an optical fiber, or a digital subscriber line (digital subscriber line, DSL)) or wireless (for example, infrared, radio, or microwave) manner. The computer-readable storage medium may be any usable medium that can be accessed by a computer, or a data storage device, such as a server or a data center, integrating one or more usable media. The usable medium may be a magnetic medium (for example, a floppy disk, a hard disk drive, or a magnetic tape), an optical medium (for example, a high-density digital video disc (digital video disc, DVD)), a semiconductor medium (for example, a solid state disk (solid state disk, SSD)), or the like.

An embodiment of this application further provides a registration apparatus, including a processor and an interface. The processor is configured to perform the method in any one of the foregoing method embodiments that is applied to the network device or the terminal device.

It should be understood that a processing apparatus such as the foregoing registration apparatus, may be a chip, and the processor may be implemented by using hardware or software. When the processor is implemented by using hardware, the processor may be a logic circuit, an integrated circuit, or the like. When the processor is implemented by using software, the processor may be a general-purpose processor, and is implemented by reading software code stored in a memory. The memory may be integrated into the processor, or may be located outside the processor and exist independently.

An embodiment of this application further provides a computer-readable storage medium. The computer-readable storage medium stores a computer program. When the computer program is executed by a computer, the computer may implement a procedure related to the network device or the terminal device in embodiments provided in the foregoing method embodiments.

An embodiment of this application further provides a computer program product. The computer program product is configured to store a computer program. When the computer program is executed by a computer, the computer may implement a procedure related to the network device or the terminal device in embodiments provided in the foregoing method embodiments.

An embodiment of this application provides a communication system. The communication system may include a network device and a terminal device that are configured to implement any one of the foregoing embodiments.

An embodiment of this application provides a communication system. The communication system may include a first session management function and a first MBS authentication and authorization function that are configured to implement Embodiment 1.

Optionally, the communication system further includes a terminal device and/or a first MBS user plane function that are/is configured to implement Embodiment 1.

An embodiment of this application provides a communication system. The communication system may include a first MBS authentication and authorization function and a first MBS user plane function that are configured to implement Embodiment 1.

An embodiment of this application provides a communication system. The communication system may include a first MBS user plane function and a terminal device that are configured to implement Embodiment 2.

An embodiment of this application provides a communication system. The communication system may include an authentication and authorization function and an access and mobility management function that are configured to implement Embodiment 3.

An embodiment of this application provides a communication system. The communication system may include a first session management function and a first MBS user plane function that are configured to implement Embodiment 4.

Optionally, the communication system further includes a first MBS authentication and authorization function configured to implement Embodiment 4.

It should be understood that the processor in embodiments of this application may be a CPU, or may be another general-purpose processor, a digital signal processor (digital signal processor, DSP), an application-specific integrated circuit (application-specific integrated circuit, ASIC), a field programmable gate array (field programmable gate array, FPGA) or another programmable logic device, a discrete gate or a transistor logic device, a discrete hardware component, or the like. The general-purpose processor may be a microprocessor, or the processor may be any conventional processor or the like.

It may be further understood that the memory in embodiments of this application may be a volatile memory or a non-volatile memory, or may include a volatile memory and a non-volatile memory. The non-volatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM), which is used as an external cache. Through examples rather than limitative descriptions, RAMs in many forms may be used, for example, a static random access memory (static RAM, SRAM), a dynamic random access memory (dynamic RAM, DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchlink dynamic random access memory (synchlink DRAM, SLDRAM), and a direct rambus random access memory (direct rambus RAM, DR RAM).

It should be noted that when the processor is a general-purpose processor, a DSP, an ASIC, an FPGA, or another programmable logic device, discrete gate, transistor logic device, or discrete hardware component, the memory (storage module) is integrated into the processor.

It should be noted that the memory described in this specification is intended to include but not limited to these memories and any memory of another appropriate type.

It should be understood that sequence numbers of the foregoing processes do not mean execution sequences in various embodiments of this application. The execution sequences of the processes should be determined according to functions and internal logic of the processes, and should not be construed as any limitation on the implementation processes of embodiments of this application.

A person of ordinary skill in the art may be aware that, in combination with the examples described in embodiments disclosed in this specification, units and algorithm steps may be implemented by electronic hardware or a combination of computer software and electronic hardware. Whether the functions are performed by hardware or software depends on particular applications and design constraint conditions of the technical solutions. A person skilled in the art may use different methods to implement the described functions for each particular application, but it should not be considered that the implementation goes beyond the scope of this application.

It may be clearly understood by a person skilled in the art that, for the purpose of convenient and brief description, for a detailed working process of the foregoing system, apparatus, and unit, refer to a corresponding process in the foregoing method embodiments. Details are not described herein again.

In the several embodiments provided in this application, it should be understood that the disclosed system, apparatus, and method may be implemented in other manners. For example, the described apparatus embodiment is merely an example. For example, division into the units is merely logical function division and may be other division during actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or the units may be implemented in electrical, mechanical, or other forms.

The units described as separate parts may or may not be physically separate, and parts displayed as units may or may not be physical units, may be located in one position, or may be distributed on a plurality of network units. Some or all of the units may be selected based on actual requirements to achieve the objectives of the solutions of embodiments.

In addition, functional units in embodiments of this application may be integrated into one processing unit, or each of the units may exist alone physically, or two or more units are integrated into one unit.

When the functions are implemented in a form of a software functional unit and sold or used as an independent product, the functions may be stored in a computer-readable storage medium. Based on such an understanding, the technical solutions of this application essentially, or the part contributing to the conventional technology, or some of the technical solutions may be implemented in a form of a software product. The computer software product is stored in a storage medium, and includes several instructions for instructing a computer device (which may be a personal computer, a server, a network device, or the like) to perform all or some of the steps of the methods described in embodiments of this application. The foregoing computer-readable storage medium may be any usable medium that can be accessed by a computer. By way of example but not limitation, the computer-readable medium may include a random access memory (random access memory, RAM), a read-only memory (read-only memory, ROM), an electrically erasable programmable read-only memory (electrically erasable programmable read-only memory, EEPROM), a compact disc read-only memory (compact disc read-only memory, CD-ROM), a universal serial bus flash disk (universal serial bus flash disk), a removable hard disk or another compact disc storage, a magnetic disk storage medium or another magnetic storage device, or any other medium that can be used to carry or store expected program code in a form of instructions or a data structure and that can be accessed by a computer.

The foregoing descriptions are merely specific implementations of this application, but are not intended to limit the protection scope of embodiments of this application. Any variation or replacement readily figured out by a person skilled in the art within the technical scope disclosed in embodiments of this application shall fall within the protection scope of embodiments of this application. Therefore, the protection scope of embodiments of this application shall be subject to the protection scope of the claims.

## Claims

1. A registration method, comprising:
receiving, by a first session management function, identification information of a multicast broadcast service, MBS (service), from a terminal device;
determining, by the first session management function based on the identification information of the MBS (service), to perform authentication and authorization on the MBS (service) of the terminal device; and
initiating, by the first session management function, the authentication and authorization on the MBS (service) of the terminal device.

2. The method according to claim 1, wherein the determining, by the first session management function based on the identification information of the MBS (service), to perform authentication and authorization on the MBS (service) of the terminal device comprises:
determining, by the first session management function based on subscription data of the MBS (service), to perform authorization on a device that requests to use the MBS (service) before using the MBS (service); and
determining, by the first session management function, to perform authentication and authorization on the MBS (service) of the terminal device.

3. The method according to claim 1 or 2, wherein the initiating, by the first session management function, the authentication and authorization on the MBS (service) of the terminal device comprises:
sending, by the first session management function, a first message to the terminal device, wherein the first message comprises the identification information of the MBS (service); and
receiving, by the first session management function, a second message from the terminal device, wherein the second message comprises a first identifier of the terminal device and the identification information of the MBS (service), and the first identifier is an identifier used when the terminal device uses the MBS (service).

4. The method according to claim 3, wherein after the receiving, by the first session management function, a second message from the terminal device, the method further comprises:
sending, by the first session management function, a third message to a first MBS authentication and authorization function, wherein the third message comprises the identification information of the MBS (service) and the first identifier of the terminal device, and the third message is used to request to perform authentication and authorization on the MBS (service) of the terminal device.

5. The method according to claim 4, wherein after the sending, by the first session management function, a third message to a first MBS authentication and authorization function, the method further comprises:
receiving, by the first session management function, a fourth message from the first MBS authentication and authorization function, wherein the fourth message comprises an authentication and authorization result, and the authentication and authorization result comprises success or failure.

6. The method according to claim 5, wherein the fourth message further comprises a validity period of the authentication and authorization result or a key of the MBS (service), and the key of the MBS (service) is used to protect data of the MBS (service).

7. The method according to claim 6, wherein after the receiving, by the first session management function, a fourth message from the first MBS authentication and authorization function, the method further comprises:
sending, by the first session management function, the authentication and authorization result to the terminal device.

8. The method according to claim 7, wherein the method further comprises:
sending, by the first session management function, the validity period of the authentication and authorization result to the terminal device.

9. The method according to claim 7, wherein the method further comprises:
sending, by the first session management function, the key of the MBS (service) to the terminal device.

10. The method according to any one of claims 6 to 8, wherein the fourth message further comprises the validity period of the authentication and authorization result, and the method further comprises:
releasing, by the first session management function, a session of the MBS (service) of the terminal device based on the validity period of the authentication and authorization result.

11. The method according to any one of claims 1 to 10, wherein the receiving, by a first session management function, identification information of an MBS (service) from a terminal device comprises:
receiving, by the first session management function, the identification information of the MBS (service) from the terminal device via an access and mobility management function; or
receiving, by the first session management function, the identification information of the MBS (service) from the terminal device via a user plane function.

12. A registration method, comprising:
receiving, by a first multicast broadcast service MBS authentication and authorization function, a third message from a first session management function, wherein the third message comprises identification information of an MBS (service) and a first identifier of a terminal device, the third message requests to perform authentication and authorization on the MB S (service) of the terminal device, and the first identifier is an identifier used when the terminal device uses the MBS (service); and
sending, by the first MBS authentication and authorization function, a fourth message to the first session management function, wherein the fourth message comprises an authentication and authorization result, and the authentication and authorization result comprises success or failure.

13. The method according to claim 12, wherein the fourth message further comprises a validity period of the authentication and authorization result or a key of the MBS (service), and the key of the MBS (service) is used to protect data of the MBS (service).

14. The method according to claim 13, wherein after the sending, by the first MBS authentication and authorization function, a fourth message to the first session management function, the method further comprises:
sending, by the first MBS authentication and authorization function, the key of the MBS (service) to the terminal device.

15. The method according to claim 14, wherein before the sending, by the first MBS authentication and authorization function, the key of the MBS (service) to the terminal device, the method further comprises:
determining, by the first MBS authentication and authorization function, that the authentication and authorization on usage of the MBS (service) by the terminal device is success;
receiving, by the first MBS authentication and authorization function, a fifth message from the terminal device, wherein the fifth message requests the key of the MBS (service);
generating or updating, by the first MBS authentication and authorization function, the key of the MBS (service); or
determining, by the first MBS authentication and authorization function, to start transmission of the data of the MBS (service).

16. The method according to claim 14 or 15, wherein the sending, by the first MBS authentication and authorization function, the key of the MBS (service) to the terminal device comprises:
sending, by the first MBS authentication and authorization function, the key of the MBS (service) to the terminal device via the first session management function;
sending, by the first MBS authentication and authorization function, the key of the MBS (service) to the terminal device via a user plane function UPF; or
sending, by the first MBS authentication and authorization function, the key of the MBS (service) to the terminal device via a first MBS user plane function.

17. A registration method, comprising:
sending, by a terminal device, identification information of a multicast broadcast service MBS (service) to a first session management function; and
receiving, by the terminal device, an authentication and authorization result from the first session management function, wherein the authentication and authorization result comprises success or failure.

18. The method according to claim 17, wherein after the sending, by a terminal device, identification information of an MBS (service) to a first session management function, the method further comprises:
receiving, by the terminal device, a first message from the first session management function, wherein the first message comprises the identification information of the MBS (service); and
sending, by the terminal device, a second message to the first session management function, wherein the second message comprises the identification information of the MBS (service) and a first identifier of the terminal device, and the first identifier is an identifier used when the terminal device uses the MBS (service).

19. The method according to claim 17 or 18, wherein the method further comprises:
receiving, by the terminal device, a key of the MBS (service) from a first MBS authentication and authorization function, wherein the key of the MBS (service) is used to protect data of the MBS (service).

20. The method according to claim 19, wherein before the receiving, by the terminal device, a key of the MBS (service) from a first MBS authentication and authorization function, the method further comprises:
sending, by the terminal device, a fifth message to the first MBS authentication and authorization function, wherein the fifth message comprises the identification information of the MBS (service) and the first identifier of the terminal device, or a key identifier of the MBS (service) and the first identifier of the terminal device, and the fifth message requests the key of the MBS (service).

21. The method according to claim 19 or 20, wherein the receiving, by the terminal device, a key of the MBS (service) from a first MBS authentication and authorization function comprises:
receiving, by the terminal device, the key of the MBS (service) from the first MBS authentication and authorization function via the first session management function;
receiving, by the terminal device, the key of the MBS (service) from the first MBS authentication and authorization function via a user plane function UPF; or
receiving, by the terminal device, the key of the MBS (service) from the first MBS authentication and authorization function via a first MBS user plane function.

22. A registration method, comprising:
receiving, by a first multicast broadcast service MBS user plane function, a security policy of an MBS (service) from a first MBS authentication and authorization function, wherein the security policy of the MBS (service) indicates to perform security protection on data of the MBS (service); and
performing, by the first MBS user plane function according to the security policy of the MBS (service), the security protection on the data of the MBS (service) by using a key of the MBS (service).

23. The method according to claim 22, wherein the method further comprises:
receiving, by the first MBS user plane function, the key of the MBS (service) from the first MBS authentication and authorization function.

24. The method according to claim 22 or 23, wherein the method further comprises:
generating, by the first MBS user plane function, the key of the MBS (service).

25. An event monitoring apparatus, comprising a processor and a memory, wherein the processor is coupled to the memory;
the memory is configured to store a computer program; and
the processor is configured to execute the computer program stored in the memory, to enable the apparatus to perform the method according to any one of claims 1 to 11, perform the method according to any one of claims 12 to 16, perform the method according to any one of claims 17 to 21, or perform the method according to any one of claims 22 to 24.

26. A computer-readable storage medium, comprising a program or instructions, wherein when the program or the instructions are run on a computer, the method according to any one of claims 1 to 11 is performed, the method according to any one of claims 12 to 16 is performed, the method according to any one of claims 17 to 21 is performed, or the method according to any one of claims 22 to 24 is performed.

27. A computer program product, comprising a program or instructions, wherein when the program or the instructions are run on a computer, the method according to any one of claims 1 to 11 is performed, the method according to any one of claims 12 to 16 is performed, the method according to any one of claims 17 to 21 is performed, or the method according to any one of claims 22 to 24 is performed.

28. A chip, wherein the chip is coupled to a memory, and is configured to read and execute program instructions stored in the memory, to perform the method according to any one of claims 1 to 11, perform the method according to any one of claims 12 to 16, perform the method according to any one of claims 17 to 21, or perform the method according to any one of claims 22 to 24.

29. A communication system, comprising a first session management function configured to perform the method according to any one of claims 1 to 11, and a first multicast broadcast service MBS authentication and authorization function configured to perform the method according to any one of claims 12 to 16.

30. A communication system, comprising a first multicast broadcast service MBS authentication and authorization function and a first MBS user plane function, wherein
the first MBS authentication and authorization function is configured to send a security policy of an MBS (service) to the first MBS user plane function, wherein the security policy of the MBS (service) indicates to perform security protection on data of the MBS (service); and
the first MBS user plane function is configured to: receive the security policy of the MBS (service); and perform, according to the security policy of the MBS (service), the security protection on the data of the MBS (service) by using a key of the MBS (service).

31. The system according to claim 30, wherein the first MBS authentication and authorization function is further configured to send the key of the MBS (service) to the first MBS user plane function; and
the first MBS user plane function is further configured to receive the key of the MBS (service).
